# EUROPÄISCHE PATENTANMELDUNG

(11) **EP 4 692 556 A2**
(43) Veröffentlichungstag der Anmeldung: **11.02.2026**
(21) Anmeldenummer: 25223350.7
(22) Anmeldetag: 27.06.2022
(51) Int. Cl.: F04C 29/02

(54) **TROCKENVERDICHTENDER VERDICHTER UND VERFAHREN ZUR ÖLABSCHEIDUNG FÜR EINEN TROCKENVERDICHTENDEN VERDICHTER**

(30) Priorität: 30.06.2021 DE 102021116925
(62) Teilanmeldung aus: 22735424.8
(71) Anmelder: Kaeser Kompressoren SE, 96450 Coburg (DE)
(72) Erfinder: SIMROSS, Dirk, 96450 Coburg (DE)
(74) Vertreter: Meissner Bolte Partnerschaft mbB

(57) **Zusammenfassung**

Die Erfindung betrifft einen trockenverdichtenden bzw. ölfreien Verdichter zur Erzeugung eines verdichteten Gases und ein Verfahren zur Ölabscheidung für einen trockenverdichtenden Verdichter (1). Der Verdichter hat ein Verdichtergehäuse (4), einen Verdichtungsraum (5) und mindestens einen Ölraum (19a, 19b), in dem ein ölgeschmiertes Lager (18a, 18b) der Rotorlagerung (16) aufgenommen ist, sowie eine Wellendichtungsanordnung (10a, 10b), die zwischen dem ölgeschmierten Lager (18a, 18b) und dem Verdichtungsraum (5) angeordnet ist. Die Wellendichtungsanordnung (10a, 10b) weist eine dem ölgeschmierten Lager (18a, 18b) zugewandte äußere Dichtung (17a, 17b) und eine dem Verdichtungsraum (5) zugewandte innere Dichtung (12a, 12b) auf, wobei zwischen der äußeren Dichtung (17a, 17b) und der inneren Dichtung (12a, 12b) mindestens ein Sperrgasraum (13a, 13b, 13c, 13d) zur Aufnahme von Sperrgas ausgebildet ist. Der Ölraum (19a, 19b) weist mindestens einen Gaszufluss für einen Sperrgasstrom aus dem Sperrgasraum (13a, 13b, 13c, 13d) und einen Gasabfluss (26) zur Verbindung mit einem Ölabscheider (30, 31, 32, 33) auf. Der Ölraum (19a, 19b) stellt einen Ölraumdruck p_{OR} bereit, der den Umgebungsdruck p₀ des Verdichtergehäuses (4) um eine Ölabscheidedruckdifferenz Δp übersteigt.

## Beschreibung

Die Erfindung betrifft einen trockenverdichtenden Verdichter zur Erzeugung eines verdichteten Gases, insbesondere von Druckluft, sowie ein Verfahren zur Ölabscheidung für einen solchen trockenverdichtenden Verdichter.

Trockenverdichtende bzw. ölfrei verdichtende Verdichter werden vor allem für Anwendungen eingesetzt, in denen es auf die Bereitstellung von ölfreiem verdichtetem Prozessgas, insbesondere von ölfreier Druckluft, ankommt, wie beispielsweise in der Lebensmittel- oder der pharmazeutischen Industrie. Anders als bei ölgeschmierten bzw. öleingespritzten Verdichten, soll bei trockenverdichtenden Verdichtern kein Öl in den Verdichtungsraum und weiter in das erzeugte verdichtete Gas gelangen. Für die Lagerung der Welle der Verdichtungsrotoren ist jedoch häufig eine Ölschmierung vorgesehen.

Aufgrund der hohen Rotationsgeschwindigkeiten der Verdichterrotoren, treten an den Wellendichtungen hohe Umfangsgeschwindigkeiten der Welle auf. Deshalb werden typischerweise berührungslose Dichtungen eingesetzt. Berührungslose Dichtungen haben naturgemäß eine gewisse Leckage. Neben dem unerwünschten Verlust von zu verdichtetem Gas aus dem Verdichtungsraum ist auch eine Abdichtung gegen Öleintritt (oder Eintritt von Fettpartikeln bei Fettschmierung der Lager) aus dem Bereich der Lager in den Verdichtungsraum wünschenswert, um eine Verunreinigung des verdichteten Gases zu verhindern.

Trockenverdichtende Verdichter, in denen Sperrluft zur Abdichtung eingesetzt wird, sind aus FR 2 569 780 A1, EP 0 674 751 A1 und EP 1 975 410 A1 bekannt.

Aus dem Stand der Technik bekannte trockenverdichtende Verdichter haben mehrere Nachteile.

Sofern der Betrieb des Verdichters im Leerlauf möglich ist, kann aufgrund der Ansaugdrosselung durch das Einlassventil im Verdichtungsraum auf der Saugseite ein Unterdruck entstehen, so dass durch die (undichten) Wellendichtungen Gas in den Verdichtungsraum angesaugt wird, das mit Öl und/oder Fett kontaminiert sein kann. Außerdem können über vorhandene Drainageöffnungen der Wellendichtungen Verunreinigungen aus der Umgebung angesaugt werden, die zum einen in das Prozessgas bzw. die Druckluft gelangen und zum anderen die Wellendichtungen beschädigen können. Im Lastbetrieb können aufgrund des Druckgefälles Leckageströme über Drainageöffnungen bzw. Laternen der Wellendichtungen in die Umgebung gelangen, die Verunreinigungen durch Schmierstoffe, wie Öl oder Fett, enthalten können.

Aufgrund der inhärenten Leckage der Wellendichtungen kann ein Leckagegasstrom in den Bereich der ölgeschmierten Lager gelangen, wobei das aus der Wellendichtung austretende Gas bzw. Luft mit Öl kontaminiert wird. Dieses Öl-Luft-Gemisch (Ölnebel) gelangt bei vielen trockenverdichtenden Verdichtern durch Öffnungen im Verdichtergehäuse in die Umgebung, die dadurch mit Öl kontaminiert wird. Außerdem können austretende Ölaerosole in den Ansaugbereich des Verdichters strömen und somit die Qualität der erzeugten Druckluft verschlechtern. Das Druckniveau im Bereich der Lager liegt bei diesen Verdichtern auf dem Umgebungsdruckniveau.

Die teilweise eingesetzten Ölnebelabsaugungen sind aufwendig und störanfällig. Sofern Ölabscheider zur Reinigung von austretender kontaminierter Luft im Stand der Technik überhaupt verwendet werden, erfordern diese den Einsatz zusätzlicher Energie, um das Druckniveau auf der Ausströmseite des Ölabscheiders abzusenken, beispielsweise über eine mit Druckluft betriebene Ejektordüse (Vakuumsaugdüse) oder durch eine elektrisch angetriebene Ansaugung. Ejektordüsen können außerdem zu einer Reduktion der Liefermenge der Druckluft und bei Verstopfung mit Verunreinigungen zu Störfällen im Betrieb des Verdichters führen.

Aus EP 1 447 566 A1 ist eine Drehkolbenmaschine mit einer Zentrifuge zur Erzeugung eines Unterdrucks in einem Ölraum bekannt.

Aus EP 0 719 910 A1 ist ein ölfrei verdichtender Verdichter mit einer Saugpumpe in Form eines Ejektors bekannt.

Ausgehend von diesem Stand der Technik hat die Erfindung zum einen die Aufgabe, ein verdichtetes Gas, insbesondere Druckluft, von hoher Qualität bereitzustellen, insbesondere für verschiedene Betriebszuständen des Verdichters, und zum anderen die Kontamination der Umgebung mit Schmierstoff, insbesondere mit Öl, zu vermeiden. Insbesondere soll eine möglichst gründliche, einfache und energieeffiziente Reinigung von aus den Wellendichtungen austretenden und durch die Lagerschmierung kontaminierten Luftströme erreicht werden.

Diese Aufgabe wird jeweils gelöst durch einen trockenverdichtenden Verdichter gemäß den Ansprüchen 1 oder 3 sowie durch ein Verfahren gemäß Anspruch 23.

Insbesondere wird die Aufgabe gelöst durch einen trockenverdichtenden Verdichter zur Erzeugung eines verdichteten Gases, insbesondere zur Erzeugung von Druckluft, mit einer oder mehreren Verdichterstufen, umfassend
- ein Verdichtergehäuse,
- mindestens einen Verdichterrotor, der über eine Rotorlagerung drehbar bezüglich des Verdichtergehäuses gelagert ist,
   wobei das Verdichtergehäuse
   ∘ einen Verdichtungsraum zur Verdichtung von angesaugtem Gas durch den Verdichterrotor und
   ∘ mindestens einen Ölraum, in dem mindestens ein ölgeschmiertes Lager der Rotorlagerung zur Lagerung eines Wellenabschnitts des Verdichterrotors aufgenommen ist, aufweist,
- eine dem Wellenabschnitt zugeordnete Wellendichtungsanordnung, die zwischen dem ölgeschmierten Lager und dem Verdichtungsraum zur Abdichtung des Verdichtungsraums gegen Öleintritt aus dem Ölraum angeordnet ist,
wobei die Wellendichtungsanordnung eine dem ölgeschmierten Lager zugewandte, insbesondere berührungslose, äußere Dichtung und eine dem Verdichtungsraum zugewandte, insbesondere berührungslose, innere Dichtung aufweist, wobei zwischen der äußeren Dichtung und der inneren Dichtung ein Sperrgasraum zur Aufnahme von Sperrgas ausgebildet ist, wobei der Ölraum mindestens einen Gaszufluss für einen Sperrgasstrom aus dem Sperrgasraum und einen Gasabfluss zur Verbindung mit einem Ölabscheider, insbesondere Ölnebelabscheider, aufweist, und wobei der Ölraum dazu ausgebildet ist, einen Ölraumdruck p_{OR} bereitzustellen, der den Umgebungsdruck p₀ des Verdichtergehäuses um eine Ölabscheidedruckdifferenz Δp übersteigt, die vorzugsweise mindestens 20 mbar (2x10³ Pa) beträgt.

Der Erfindung liegt die Idee zugrunde, durch den dem Ölraum zufließenden Sperrgasstrom einen Überdruck im Ölraum gegenüber der Umgebung zu erzeugen, der zur Ölabscheidung genutzt werden kann.

Nach einer Idee der Erfindung kann vorzugsweise darauf verzichtet werden, den Druck auf der Ausströmseite des Ölabscheiders abzusenken, wobei eine zusätzliche Absenkung des Druckniveaus auf der Ausströmseite des Ölabscheiders nicht ausgeschlossen ist. Der erzeugte Ölraumdruck ist vorzugsweise ausreichend groß, um eine für die Durchströmung eines Ölabscheiders, insbesondere Ölnebelabscheiders, zu überwindende Druckdifferenz, die als Ölabscheidedruckdifferenz bezeichnet werden kann, zu überwinden. Die Ölabscheidedruckdifferenz Δp kann als ein Überdruck im Ölraum, gegenüber dem Druck p₀ in der Umgebung des Verdichtergehäuses (Umgebungsdruck des Verdichtergehäuses) verstanden werden. Der Umgebungsdruck des Verdichtergehäuses kann dem Ansaugdruck des Verdichters entsprechen, insbesondere wenn das verdichtete Gas ein Prozessgas (d.h. keine Luft) ist, wobei vorzugsweise ein gereinigter Prozessgasstrom in den Ansaugbereich des Verdichters rückgeführt wird. Die Ölabscheidedruckdifferenz Δp ist insbesondere ausreichend groß, um Druckverluste zwischen dem Ölraum und der Ausströmseite eines Ölabscheiders, umfassend insbesondere Leitungsdruckverluste und eine im Ölabscheider zu überwindende Abscheidedruckdifferenz, beispielsweise die Druckdifferenz über mindestens ein Filtermedium und/oder Strömungsdruckverluste einer Strömungsumlenkung zur Ölabscheidung, (mindestens) zu überwinden. Der Ölraumdruck p_{OR} kann als die Summe des Umgebungsdrucks p₀ des Verdichtergehäuses und der Ölabscheidedruckdifferenz Δp verstanden werden (p_{OR} = p₀ + Δp). Auf der Ausströmseite eines Ölabscheiders kann das Druckniveau p₀ des Umgebungsdrucks des Verdichtergehäuses herrschen. Zum einen vereinfacht sich die Ölabscheidung durch den ermöglichten Wegfall einer Absaugvorrichtung auf der Ausströmseite des Ölabscheiders. Dadurch kann auch Energie eingespart werden. Zum anderen können Ölabscheider mit einem höheren Abscheidegrad eingesetzt werden, die üblicherweise eine höhere Druckdifferenz für die Durchströmung (erhöhter Druckverlust) erfordern. Dadurch ist eine gründlichere Reinigung des austretenden Gases erreichbar.

Eine bevorzugte Ölabscheidedruckdifferenz Δp beträgt über 20 mbar, weiter vorzugsweise über 50 mbar, weiter vorzugsweise über 100 mbar, weiter vorzugsweise über 150 mbar, weiter vorzugsweise ungefähr 200 mbar. Eine Ölabscheidedruckdifferenz Δp kann zwischen 20 mbar und 1000 mbar (1 bar), vorzugsweise zwischen 50 mbar und 500 mbar, weiter vorzugsweise zwischen 100 mbar und 300 mbar, weiter vorzugsweise zwischen 150 mbar und 250 mbar. Bevorzugt liegt die Ölabscheidedruckdifferenz Δp im Bereich von 150 mbar bis 200 mbar, besonders bevorzugt bei ca. 170 mbar.

Ein Wert für die Ölabscheidedruckdifferenz Δp bezieht sich insbesondere einen stationären (eingelaufenen) Zustand des Ölabscheiders. Beispielsweise kann der Wert (z.B. 20 mbar) der Ölabscheidedruckdifferenz im Neuzustand des Ölabscheiders (Filters), z.B. für einige erste Betriebsstunden, deutlich unterhalb des Werts (z.B. 170 mbar) im stationären Betrieb, z.B. nach mehr als 1000 Betriebsstunden, betragen.

Aus dem Stand der Technik ist es bekannt, dass Hersteller von Verdichtergehäusen den maximal zulässigen Überdruck, mit dem die Wellendichtungen des Verdichtergehäuses beaufschlagt werden dürfen, mit ca. 2 mbar angeben. Typische Dichtungen mit Fördergewinde für den Wellendurchgang im Verdichtergehäuse sind beispielsweise für einen Druckunterschied von bis zu ca. 0,5 mbar (5 mm Wassersäule) ausgelegt. Ein erfindungsgemäßer Ölraum, der einen Ölraumdruck p_{OR} bereitstellt, der den Umgebungsdruck p₀ des Verdichtergehäuses um eine Ölabscheidedruckdifferenz Δp übersteigt, führt von solchen bekannten Lösungen deutlich weg.

Durch eine Ölabscheidedruckdifferenz Δp von mindestens 20 mbar können im Vergleich zum Stand der Technik, insbesondere ohne Druckabsenkung auf der Ausströmseite des Ölabscheiders, Ölabscheider mit höherer Abscheidewirkung, vorzugsweise feinere (bessere) Filter verwendet werden.

Indem der Ölraum einen Überdruck gegenüber dem Umgebungsdruck des Verdichtergehäuses aufweist und einen Gasabfluss zur Verbindung mit einem Ölabscheider aufweist, wird ein (unkontrollierter) Austritt des Gas-Öl-Gemischs in die Umgebung verhindert. Dadurch wird zum einen die Kontamination der Umgebung mit Öl und zum anderen ein Ansaugen von Ölaerosolen durch den Verdichter vermieden. Dadurch verbessert sich wiederum die Qualität des verdichteten Gases im Hinblick auf seine Reinheit.

Der Ölraum ist insbesondere gasdicht (bis auf den Gasabfluss zum Ölabscheider und Leckagen der Dichtungen) gegenüber der Umgebung ausgeführt, wobei der dem Ölraum zufließende Sperrgasstrom (oder ein Leckagegasstrom) ein Ausströmen des Gases aus dem Ölraum durch die Wellendichtungsanordnung (entgegen der den Sperrgasstrom erzeugenden Druckdifferenz) verhindern kann. Der Ölraum ist insbesondere dazu ausgebildet, einen Ölraumdruck aufzubauen und zu halten und ist insofern gasdicht gegenüber der Umgebung. Ein zu verdichtendes Gas kann ein Prozessgas, wie z.B. Argon oder Stickstoff, oder Luft, insbesondere Umgebungsluft, sein.

Unter dem Umgebungsdruck p₀ des Verdichtergehäuses kann der Druck verstanden werden, der an einem Gasauslass stromabwärts eines Ölabscheiders herrscht, an dem der Gasstrom, aus dem Öl abgeschieden wurde (d.h. der gereinigte Gasstrom) in die Umgebung des Verdichtergehäuses austritt. Der Umgebungsdruck des Verdichtergehäuses ist üblicherweise der atmosphärische Umgebungsluftdruck. Der Umgebungsdruck des Verdichtergehäuses kann aber, beispielsweise wenn der Verdichter in einem abgeschlossenen Raum mit anderem Umgebungsdruckniveau (Unterdruck oder Überdruck gegenüber der Atmosphäre) betrieben wird, vom atmosphärischen Umgebungsdruck abweichen. Der Umgebungsdruck des Verdichtergehäuses kann auch dem Ansaugdruck des Verdichters entsprechen, insbesondere bei der Verdichtung eines Prozessgases und Rückführung des gereinigten Prozessgasstroms in den Ansaugbereich des Verdichters. Bei der Verdichtung eines Prozessgases kann der Umgebungsdruck p₀ des Verdichtergehäuses unabhängig vom atmosphärischen Umgebungsdruck sein, insbesondere niedriger oder höher als der atmosphärische Umgebungsdruck, wobei sich der Ölraumdruck p_{OR} insbesondere in Abhängigkeit des Ansaugdrucks des Verdichters und der Ölabscheidedruckdifferenz Δp einstellt. Der Umgebungsdruck kann abhängig von der Seehöhe sein, in der der Verdichter betrieben wird. Bei einem Umgebungsdruck p₀ von 1 bar (1x10⁵ Pa), beispielsweise als Annäherung für Normbedingungen, entspricht eine Ölabscheidedruckdifferenz Δp von mindestens 20 mbar mindestens 2% des Umgebungsdrucks p₀. Ein (absoluter) Ölraumdruck p_{OR} würde in einem solchen Fall demnach mindestens 1,02 bar (1020 mbar) betragen. Eine bevorzugte Ölabscheidedruckdifferenz Δp im Bereich von 200 mbar würde bei einem Umgebungsdruck p₀ von 1 bar einer Ölabscheidedruckdifferenz Δp von ca. 20% entsprechen.

Ein Sperrgasraum kann als ein Zwischenraum der Wellendichtungsanordnung verstanden werden, insbesondere der Raum zwischen einer äußeren und einer inneren Wellendichtung. Der Sperrgasstrom kann aus einer Leckage der Wellendichtungsanordnung stammen. Der Sperrgasstrom kann der Wellendichtungsanordnung zugeführtes Sperrgas beinhalten oder daraus bestehen, kann aber auch aus dem Verdichtungsraum als Leckagegasstrom ausgetretenes verdichtetes oder zu verdichtendes Gas beinhalten, insbesondere aufgrund einer möglichen Vermischung im Sperrgasraum. Der Sperrgasstrom eines Sperrgasraums kann demnach aus unterschiedlichen Quellen stammen, insbesondere aus Leckagen einer (inneren) Wellendichtung der zugeordneten Wellendichtungsanordnung, aus Leckagen anderer Wellendichtungsanordnungen, beispielsweise auf der jeweils anderen Seite des Verdichters (Druck- oder Saugseite), von Wellendichtungsanordnungen einer weiteren Verdichterstufe, oder aus in den Sperrgasraum zugeführten Sperrgas. Eine innere Wellendichtung hat insbesondere die Aufgabe, den Verdichtungsraum gegen Gaseintritt (z.B. bei Unterdruck-Betrieb im Leerlauf) und Gasaustritt (bei Überdruck-Betrieb im Lastlauf) abzudichten.

Unter einem ölgeschmierten Lager kann auch ein fettgeschmiertes oder ein öl-und fettgeschmiertes Lager verstanden werden. Dies gilt zumindest insoweit, als ein zur Lagerschmierung verwendetes Fett als ein mit Bindemittel vermischtes Öl angesehen werden kann. Im Ölraum bildet sich insbesondere ein Ölnebel, der ein Gemisch aus dem ölgeschmierten Lager ausgetretenes Öl (oder Fett) und dem Ölraum zugeflossenes Gas ist. Der Ölraum kann auch als Ölnebelraum bezeichnet werden. Ein Ölnebel entsteht vorzugsweise bei hohen Drehzahlen und Umfangsgeschwindigkeiten, die mehr als 100 m/s betragen können, wobei Öltröpfchen beim Aufprall fein zerstäubt werden. Schwebende Öltröpfchen können durch einen Gasstrom mitgenommen werden und im Ölraum einen Ölnebel bilden.

Unter einer berührungslosen Dichtung kann eine Dichtung verstanden werden, deren Dichtelemente (Dichtflächen) zum Zweck der Abdichtung keine Berührung erfordern, sondern vorzugsweise auf einer strömungsbedingten Dichtwirkung beruhen. Berührungslose Dichtungen weisen insbesondere einen (schmalen) Dichtspalt auf, der naturgemäß eine gewisse Leckage zulässt. Auch bei berührungslosen Dichtungen kann es aber zu (leichten) Berührungen der Dichtelemente, beispielsweise zwischen einer (metallischen) Dichtinnenfläche und der (beschichteten) Umfangsfläche einer abzudichtenden Rotorwelle kommen. Berührungslose Dichtungen weisen jedoch typischerweise im Betrieb, vorzugsweise nach dem Einlaufen, zum Beispiel abhängig von der Durchbiegung der abzudichtenden Welle, der thermischen Dehnungen und dem Verschleiß der Beschichtungen (der Dichtung und/oder der Welle), zumindest in Teilbereichen einen Dichtspalt auf, der einen Leckagestrom zulässt.

Mehrere Verdichterstufen können ein gemeinsames Verdichtergehäuse oder separate Verdichtergehäuse aufweisen.

Insbesondere ist der Gasabfluss des Ölraums mit mindestens einem Ölabscheider, insbesondere einem Ölnebelabscheider, verbunden. Der Ölabscheider kann mehrrere, gleichartige oder verschiedene, Abscheidungsstufen umfassen, insbesondere einen Vorabscheider und/oder einen Feinabscheider und/oder einen Restölabscheider. Es können mehrere Ölabscheider, vorzugsweise Feinabscheider, in Reihe geschaltet sein. Der Ölabscheider (Ölnebelabscheider) umfasst vorzugsweise (mindestens) einen Koaleszenzfilter. Der Gasabfluss kann, beispielsweise über einen Hohlraum im Verdichtergehäuse oder über eine oder mehrere Verbindungsleitungen (unmittelbar oder mittelbar), fluidisch mit dem Ölabscheider verbunden sein.

Außerdem wird die Aufgabe insbesondere gelöst durch einen trockenverdichtenden Verdichter zur Erzeugung eines verdichteten Gases, insbesondere zur Erzeugung von Druckluft, mit einer oder mehreren Verdichterstufen, umfassend
- ein Verdichtergehäuse,
- mindestens einen Verdichterrotor, der über eine Rotorlagerung drehbar bezüglich des Verdichtergehäuses gelagert ist,
   wobei das Verdichtergehäuse
   ∘ einen Verdichtungsraum zur Verdichtung von angesaugtem Gas durch den Verdichterrotor und
   ∘ mindestens einen Ölraum, in dem mindestens ein ölgeschmiertes Lager der Rotorlagerung zur Lagerung eines Wellenabschnitts des Verdichterrotors aufgenommen ist, aufweist,
- eine dem Wellenabschnitt zugeordnete Wellendichtungsanordnung, die zwischen dem ölgeschmierten Lager und dem Verdichtungsraum zur Abdichtung des Verdichtungsraums gegen Öleintritt aus dem Ölraum angeordnet ist, und eine, insbesondere berührungslose, Dichtung aufweist,
wobei der Ölraum mindestens einen Gaszufluss für einen Leckagegasstrom aus der Wellendichtungsanordnung und einen Gasabfluss aufweist, der mit mindestens einem Ölabscheider, insbesondere Ölnebelabscheider, verbunden ist, wobei der Ölraum dazu ausgebildet ist, einen Ölraumdruck p_{OR} bereitzustellen, der den Umgebungsdruck p₀ des Verdichtergehäuses um eine Ölabscheidedruckdifferenz Δp übersteigt, die vorzugsweise mindestens 20 mbar beträgt.

Dieser Alternative der Erfindung liegt die Idee zugrunde, durch den dem Ölraum zufließenden Leckagegasstrom einen Überdruck im Ölraum gegenüber der Umgebung zu erzeugen, der zur Ölabscheidung genutzt werden kann. Es wird auf die vorherigen Erläuterungen der Erfindung sowie deren Wirkungen und Vorteile verwiesen, die analog für diese Alternative der Erfindung gelten. Ein Leckagegasstrom beinhaltet insbesondere aus dem Verdichtungsraum ausgeströmtes verdichtetes oder zu verdichtendes Gas, das insbesondere aufgrund einer Leckage der Wellendichtungsanordnung in den Ölraum einströmt.

In einer Ausführungsform dieser Alternative ist die Dichtung eine dem ölgeschmierten Lager zugewandte, insbesondere berührungslose, äußere Dichtung und die Wellendichtungsanordnung weist außerdem eine dem Verdichtungsraum zugewandte, insbesondere berührungslose, innere Dichtung auf, wobei zwischen der äußeren Dichtung und der inneren Dichtung ein Sperrgasraum zur Aufnahme von Sperrgas ausgebildet ist, wobei der Leckagegasstrom aus der Wellendichtungsanordnung insbesondere ein Sperrgasstrom aus dem Sperrgasraum ist. Diesbezüglich wird auf die vorherigen Erläuterungen der Erfindung im Zusammenhang mit einem Sperrgasraum bzw. einem Sperrgasstrom verwiesen, die analog für diese Ausführungsform gelten.

In einer bevorzugten Ausführungsform ist der Gaszufluss des Ölraums durch mindestens einen Dichtspalt der, insbesondere äußeren, Dichtung gebildet. Eine Dichtung kann mehrere, vorzugsweise axial hintereinander angeordnete, Dichtspalte aufweisen. Der Dichtspalt ist insbesondere durch eine berührungslose Dichtung bedingt und erstreckt sich vorzugsweise in Umfangsrichtung des Wellenabschnitts des Verdichterrotors. Der Dichtspalt ermöglicht insbesondere das (unverhinderbare) Durchströmen der äußeren Dichtung der Wellendichtungsanordnung durch einen Sperrgasstrom und/oder das Durchströmen der (gesamten) Wellendichtungsanordnung durch einen Leckagegasstrom, der aus dem Sperrgasraum bzw. aus dem Verdichtungsraum stammen kann.

In einer weiteren Ausführungsform umfasst der Verdichter mindestens einen Drucksensor zum Erfassen des Ölraumdrucks p_{OR}. In verschiedenen Ölräumen können verschiedene Ölraumdrücke vorliegen, die durch den Ölräumen zugeordnete Drucksensoren erfasst werden. Ein Drucksensor kann den Ölraumdruck (direkt) im Ölraum oder (indirekt) im einem mit dem Ölraum verbundenen Gasvolumen erfassen. Vorzugsweise kann der Drucksensor den Druck in einem Leitungsabschnitt erfassen, in dem (im Wesentlichen) der gleiche Druck wie der Ölraumdruck herrscht, beispielsweise in einer Verbindungsleitung zum Ölabscheider stromabwärts des Gasabflusses des Ölraums. Eine Erfassung des Ölraumdrucks p_{OR} ermöglicht eine Ermittlung der vorliegenden Ölabscheidedruckdifferenz Δp.

In einer weiteren Ausführungsform umfasst der Ölabscheider, insbesondere Ölnebelabscheider, mehrere Abscheidungsstufen, insbesondere mindestens einen Vorabscheider und/oder mindestens einen Feinabscheider und/oder mindestens einen Restölabscheider. Der Ölabscheider kann auch (nur) mehrere gleichartige Abscheidungsstufen umfassen, insbesondere (nur) mehrere Feinabscheider. Es können insbesondere mehrere Feinabscheider in Reihe geschaltet sein. Der Feinabscheider umfasst vorzugsweise einen Koaleszenzfilter, wobei mehrere (gleichartige) Koaleszenzfilter in Reihe geschaltet sein können. Beispielsweise könnte die Ölabscheidedruckdifferenz Δp bei zwei in Reihe geschalteten Koaleszenzfiltern mit einer Abscheidedruckdifferenz von je 200 mbar insgesamt 400 mbar betragen. Der Vorabscheider umfasst vorzugsweise einen Demister und/oder ein Drahtgestrickt und/oder einen Zyklonabscheider und/oder Strömungsumlenkungen, insbesondere mit Prallflächen. Der Restölabscheider umfasst vorzugsweise einen Adsorptionsfilter. Durch mehrere Abscheidungsstufen kann die Reinheit des in die Umgebung austretenden (gereinigten) Gasstroms erhöht bzw. die Kontamination der Umgebung reduziert werden. Ein Drahtgestrick oder ein Demister können eine erste Abscheidestufe bilden, die insbesondere gröbere Öltröpfchen abscheidet und vorzugsweise nur einen geringen Druckverlust erzeugt. Ein Koaleszenzfilter kann eine zweite Abscheidestufe bilden, die insbesondere einen (feinen) Ölnebel abscheidet und beispielsweise einen Druckverlust zwischen 100 mbar und 300 mbar erzeugt. Ein Adsorptionsfilter, vorzugsweise ein Aktivkohleabsorber, kann eine dritte Abscheidestufe bilden, die insbesondere verbleibendes Restöl und/oder einen Öldampf absorbiert. Im Vergleich zu einem Koaleszenzfilter kann ein Adsorptionsfilter auch Öldämpfe filtern bzw. binden. Mit einem Adsorptionfilter, insbesondere als letzte Abscheidungsstufe einer mehrstufigen Abscheidung, kann eine besonders gute Reinigung des verdichteten Gases (z.B. der Luft) für eine bestmöglichst verringerte Kontamination der Umgebung erreicht werden.

In einer bevorzugten Ausführungsform ist der Sperrgasstrom und/oder der Leckagegasstrom ein Luftstrom, wobei stromabwärts des Ölabscheiders ein Luftauslass in die freie Umgebung des Verdichters führt. Insbesondere ist das verdichtete Gas (Leckagegas bzw. Leckagegasstrom) und Sperrgas (Sperrgasstrom) Luft. Dadurch strömt ein von Öl gereinigtes Gemisch aus Leckageluft und Sperrluft in die Umgebung (Atmosphäre) aus.

In einer weiteren Ausführungsform umfasst der Verdichter eine Ölrückführleitung für im Ölabscheider abgeschiedenes Öl in den Ölraum, wobei in der Ölrückführleitung vorzugsweise eine Ölpume angeordnet ist. Die Ölpumpe ist vorzugsweise als Schlauchpumpe oder Schwingmembranpumpe ausgeführt. Die Ölrückführleitung kann zur Erzeugung eines Rückförderdrucks einen Höhenunterschied zwischen einer höheren Lage des Ölabscheiders und einer tieferen Lage eines Öleinlasses in den Ölraum aufweisen. Alternativ oder zusätzlich kann ein Ölsammelbehälter, insbesondere ein Ölsumpf vorgesehen, sein, der insbesondere über eine Gasabflussleitung mit dem Ölraum verbunden sein kann oder darin angeordnet ist, vorzugsweise in das Verdichtergehäuse integriert. Durch eine Ölrückführleitung wird ein geschlossener Ölkreislauf geschaffen, der insbesondere einen wartungsrarmen (Dauer-)Betrieb des Verdichters ermöglicht.

In einer weiteren Ausführungsform umfasst der Verdichter ein, vorzugsweise steuerbares, Abblaseventil zum Ablassen des Ölraumdrucks p_{OR} aus dem Ölraum umfasst. Das Abblaseventil kann in einer Abblaseöffnung in der Gehäusewand des Ölraums angeordnet sein und ist vorzugsweise als Überdruckventil oder (stromfrei offenes) Magnetventil ausgeführt. Ein Abblaseventil kann eine Entlastungsfunktion zur Entlüftung des Ölraums, beispielsweise im Fall eines Überdrucks oder bei einer Betriebsstörung, wie einem Stromausfall, haben. Dadurch kann gewährleistet werden, dass die gewünschte Richtung der Druckgefälle vom Verdichtungsraum zum Ölraum hin (von innen nach außen) zu jeder Zeit aufrechterhalten werden kann, um sicherzustellen, dass kein Öl in den Sperrgasraum gelangen kann. Die Kontamination der Druckluft wird so auch bei einer Betriebsstörung verhindert.

In einer weiteren Ausführungsform umfasst die Rotorlagerung ein ölgeschmiertes saugseitiges Lager und ein ölgeschmiertes druckseitiges Lager, die jeweils einen Wellenabschnitt des Verdichterrotors drehbar bezüglich des Verdichtergehäuses lagern, wobei das Verdichtergehäuse einen saugseitigen Ölraum, in dem das saugseitige Lager aufgenommen ist, und einen druckseitgen Ölraum, in dem das druckseitige Lager aufgenommen ist, aufweist, wobei der saugseitige Ölraum und der druckseitige Ölraum, insbesondere über eine Verbindungsleitung, miteinander verbunden sind. Insbesondere ist für das saugseitige Lager und das druckseitige Lager jeweils eine Wellendichtungsanordnung vorgesehen, die vorzugsweise zwischen dem jeweiligem ölgeschmierten Lager und dem Verdichtungsraum zur Abdichtung des Verdichtungsraums gegen Öleintritt aus dem jeweiligen Ölraum angeordnet ist, und jeweils eine, insbesondere berührungslose, Dichtung, insbesondere eine dem jeweiligen ölgeschmierten Lager zugewandte, insbesondere berührungslose, äußere Dichtung und jeweils eine dem Verdichtungsraum zugewandte, insbesondere berührungslose, innere Dichtung aufweist. Die Verbindungsleitung kann (teilweise) innerhalb und/oder (teilweise) außerhalb des Gehäuses verlaufen, insbesondere als Durchgangskanal im Verdichtergehäuse ausgeführt sein. Die Verbindung beider Ölräume bewirkt insbesondere einen einheitlichen Ölraumdruck p_{OR} in beiden Ölräumen, wobei beide Ölräume vorzugsweise mit einem gemeinsamen Ölabscheider verbunden sind. Alternativ können der saugseitige Ölraum und der druckseitige Ölraum getrennt voneinander sein, wobei vorzugsweise jeweils ein Ölabscheider mit einem Raum verbunden ist.

In einer weiteren Ausführungsform umfasst die Rotorlagerung ein ölgeschmiertes saugseitiges Lager und ein ölgeschmiertes druckseitiges Lager, die jeweils einen Wellenabschnitt des Verdichterrotors drehbar bezüglich des Verdichtergehäuses lagern, wobei für das saugseitige Lager eine saugseitige Wellendichtungsanordnung und für das druckseitige Lager eine druckseitige Wellendichtungsanordnung vorgesehen ist, wobei der saugseitige Sperrgasraum der saugseitigen Wellendichtungsanordnung und der druckseitige Sperrgasraum der druckseitigen Wellendichtungsanordnung über eine Sperrgas-Verbindungsleitung miteinander verbunden sind. Insbesondere weist die saugseitige Wellendichtungsanordnung eine dem ölgeschmierten Lager zugewandte, insbesondere berührungslose, äußere saugseitige Dichtung und eine dem Verdichtungsraum zugewandte, insbesondere berührungslose, innere saugseitige Dichtung auf, wobei zwischen der äußeren saugseitigen Dichtung und der inneren saugseitigen Dichtung ein saugseitiger Sperrgasraum zur Aufnahme von Sperrgas ausgebildet ist. Insbesondere weist die druckseitige Wellendichtungsanordnung eine dem ölgeschmierten Lager zugewandte, insbesondere berührungslose, äußere druckseitige Dichtung und eine dem Verdichtungsraum zugewandte, insbesondere berührungslose, innere druckseitige Dichtung auf, wobei zwischen der äußeren druckseitigen Dichtung und der inneren druckseitigen Dichtung ein druckseitiger Sperrgasraum zur Aufnahme von Sperrgas ausgebildet ist. Die Sperrgas-Verbindungsleitung kann (teilweise) innerhalb und/oder (teilweise) außerhalb des Gehäuses verlaufen, insbesondere als Durchgangskanal oder -bohrung im Verdichtergehäuse ausgeführt sein. Sperrgasräume unterschiedlicher Verdichterstufen können über eine oder mehrere Sperrgas-Verbindungsleitung(en) miteinander verbunden sein. Durch die Sperrgas-Verbindungsleitungen zwischen verschiedenen Sperrgasräumen kann Sperrgas von einem Sperrgasraum höheren Drucks zu einem Sperrgasraum niedrigeren Drucks geführt werden. Beispielsweise entsteht üblicherweise an Wellendichtungen der Druckseite durch den höheren Druck im Verdichtungsraum ein größerer Leckagestrom, und somit ein größerer Sperrgasstrom, als an Wellendichtungen der Saugseite. Ebenso entsteht typischerweise an Wellendichtungen einer (zweiten) Hochdruck-Verdichterstufe ein größerer Leckagestrom als an Wellendichtungen einer (ersten) Niederdruck-Verdichterstufe. Die Sperrgas-Verbindungsleitungen ermöglichen die Versorgung anderer Sperrgarräume entsprechend den resultierenden Druckgefällen. Dadurch kann, vorzugsweise ohne eine Zufuhr (Nachspeisung) von Sperrgas, unter bestimmten Bedingungen ein ausreichend hoher Sperrgasraumdruck zur zuverlässigen Abdichtung des zugeordneten Wellenabschnitts in einem Sperrgasraum bereitgestellt werden.

In einer weiteren Ausführungsform weist die Wellendichtungsanordnung zusätzlich eine, insbesondere berührungslose, mittlere Dichtung zwischen der äußeren Dichtung und der inneren Dichtung auf, wobei zwischen der äußeren Dichtung und der mittleren Dichtung ein äußerer Sperrgasraum zur Aufnahme von Sperrgas und zwischen der mittleren Dichtung und der inneren Dichtung ein innerer Sperrgasraum zur Aufnahme von Sperrgas ausgebildet ist. Über eine (erste) Sperrgas-Verbindungsleitung können saugseitige und druckseitige innere Sperrgasräume miteinander verbunden sein. Über eine (zweite) Sperrgas-Verbindungsleitung können saugseitige und druckseitige äußere Sperrgasräume miteinander verbunden sein. In inneren und äußeren Sperrgasräumen können unterschiedliche Sperrgasraumdrücke herrschen, insbesondere eingestellt sein. Der Sperrgasraumdruck des inneren Sperrgasraumes ist vorzugsweise höher als der Sperrgasraumdruck (p_{SGR}) des äußeren Sperrgasraumes. Eine Wellendichtungsanordnung mit zwei (oder mehr) axial hintereinander angeordneten Sperrgasräumen, kann die Abdichtwirkung der Wellendichtannordnung erhöhen.

In einer weiteren Ausführungsform weist der Verdichter eine Sperrgaszuführung auf, durch die der Sperrgasraumdruck p_{SGR} in mindestens einem Sperrgasraum variabel einstellbar, vorzugsweise regelbar, ist, wobei die Sperrgaszuführung insbesondere ein, vorzugsweise regelbares, Sperrgas-Zufuhrventil umfasst. Insbesondere umfasst die Sperrgaszuführung eine Sperrgaseinspeisung und/oder eine mit mindestens einem Sperrgasraum verbundene Sperrgas-Zufuhrleitung. Das Sperrgas-Zufuhrventil kann ein rein mechanisches, ein 2-Punkt-Magnetventil (Auf/Zu) oder ein stetig regelbares Ventil, wie ein Proportionalventil oder ein Druckminderventil, oder eine Kombination aus mehreren Ventilen sein. Die Sperrgas-Verbindungsleitung kann Teil der Sperrgaszuführung sein. Die Sperrgas-Zufuhrleitung kann mit einer Sperrgas-Verbindungsleitung verbunden sein. Die Sperrgaseinspeisung kann eine externe Sperrgasversorgung, wie das Druckluftnetz oder einen separaten Verdichter (z.B. Kolbenkompressor), oder eine interne Sperrgasversorgung, wie abgezweigtes verdichtetes Gas, eine Rückführung von der Druckseite zur Saugseitige innerhalb einer Verdichterstufe oder eine Rückführung von einer (zweiten) Hochdruck-Verdichterstufe zu einer (ersten) Niederdruck-Verdichterstufe umfassen. Über die Sperrgaszuführung kann durch eine bedarfsgerechte Nachspeisung von Sperrgas in die Sperrgasräume ein ausreichend hoher Sperrgasraumdruck p_{SGR} gewährleistet werden, der vorzugsweise (immer) höher ist als der Ölraumdruck p_{OR}. Dadurch kann auf variierende Druckverhältnisse aufgrund unterschiedlicher Betriebszustände innerhalb des Verdichters reagiert werden.

In einer weiteren Ausführungsform weist der Verdichter zwischen einer Sperrgaseinspeisung und einem Sperrgasraum mindestens ein Sperrgas-Puffervolumen auf, das vorzugsweise als Hohlraum im Verdichtergehäuse ausgebildet ist. Ein Sperrgas-Puffervolumen kann auch als Hohlraum in einem mehrteiligen Gehäuse ausgebildet sein, beispielsweise (teilweise) in einem Verdichtergehäuse und/oder (teisweise) in einem Getriebegehäuse des Verdichters. Das Verdichtergehäuse und das Getriebegehäuse sind vorzugsweise als Gussteile gefertigt. Das Sperrgas-Puffervolumen kann aber auch als ein Gasdruckbehälter ausgeführt sein. Durch ein (zusätzliches) Sperrraum-Puffervolumen kann das Volumen der Sperrgasräume kleiner dimensioniert werden. Ein Sperrgas-Puffervolumen kann eine ausreichende Aufrechterhaltung des Sperrgasraumdrucks während instationärer Betriebszustände des Verdichters gewährleisten, beispielsweise während des Abschaltens bzw. Austrudelns des Verdichters und/oder einer Entlüftung des Ölraums, oder bei unzureichender Sperrgaseinspeisung, z.B. bei geringem Netzdruck. Ein Sperrgas-Puffervolumen trägt dazu bei, dass der Sperrgasraumdruck p_{SGR} in vorzugsweise allen Betriebszuständen des Verdichters höher gehalten werden kann als der Ölraumdruck p_{OR}. Dadurch wird zum einen die Abdichtwirkung der Wellendichtungsanordnung verbessert und zu anderen ein (kontinuierlicher) Gasstrom (Sperrgasstrom) in den Ölraum sichergestellt, um den Ölraumdruck p_{OR} aufzubauen bzw. zu halten.

In einer weiteren Ausführungsform umfasst der Verdichter mindestens einen Drucksensor zum Erfassen eines Sperrgasraumdrucks p_{SGR}, insbesondere in mindestens einem Sperrgasraum und/oder in einem Sperrgas-Puffervolumen. Der Sperrgasraumdruck p_{SGR} im Sperrgasraum ist typischerweise (im Wesentlichen) gleich wie der Sperrgasraumdruck im Sperrgas-Puffervolumen. Insbesondere kann anstelle des Drucks im Sperrgasraum der Druck im Sperrgaspufferraum erfasst und/oder überwacht werden.

In einer weiteren Ausführungsform ist eine, vorzugsweise elektronische, Steuereinheit vorgesehen, die zum Überwachen des Sperrgasraumdrucks p_{SGR} und/oder des Ölraumdrucks p_{OR} und/oder des Differenzdrucks zwischen dem Sperrgasraumdruck p_{SGR} und dem Ölraumdruck p_{OR} ausgebildet ist. Der Sperrgasraumdruck p_{SGR} und der Ölraumdruck p_{OR} können über zuvor beschriebene Drucksensoren erfasst werden, die mit der Steuereinheit (drahtlose oder drahtgebunden) verbunden sind. Die Steuereinheit kann zur Berechnung der Druckdifferenz zwischen dem Sperrgasraumdruck p_{SGR} und dem Ölraumdruck p_{OR} und zur Regelung mindestens eines Sperrgas-Zufuhrventils der Sperrluftzuführung basierend auf der Druckdifferenz ausgebildet sein. Alternativ (oder zusätzlich) kann der Differenzdruck über einen Differenzdruckmessumformer erfasst (gemessen) und der Steuereinheit zur Regelung mindestens eines Sperrgas-Zufuhrventils übermittelt werden. Die Steuereinheit kann am Verdichter angeordnet sein oder über eine Sender-/Empfängereinheit über eine Datenverbindung, insbesondere über ein Netzwerk, mit dem Verdichter verbunden sein. Der Sperrgasraumdruck p_{SGR}, der Ölraumdruck p_{OR} und/oder der Differenzdruck können in festgelegten oder variablen Zeitintervallen oder kontinuierlich überwacht werden. Der zeitliche Verlauf kann in einer Speichereinheit gespeichert werden. Insbesondere die Überwachung des Differenzdrucks ermöglicht eine entsprechende Nachregelung des Sperrgasraumdrucks p_{SGR} durch eine Erhöhung der Sperrluftzufuhr.

In einer weiteren Ausführungsform ist eine, vorzugsweise elektronische, Steuereinheit dazu ausgebildet, insbesondere für verschiedene Betriebszustände des Verdichters, den Sperrgasraumdruck p_{SGR} im Sperrgasraum so einzustellen, dass der Sperrgasraumdruck p_{SGR} höher ist als der Ölraumdruck p_{OR} im Ölraum, vorzugsweise durch Regeln eines Sperrgas-Zufuhrventils, das insbesondere in einer Sperrgas-Zufuhrleitung zu dem mindestens einen Sperrgasraum angeordnet ist. In einer besonders bevorzugten Ausführungsform wird der Sperrgasraumdruck p_{SGR} so eingestellt bzw. geregelt, dass folgendes Druckgefälle gilt: p₀ < p_{OR} < p_{SGR}, vorzugsweise in jedem Betriebszustand des Verdichters bzw. über die gesamte Betriebsdauer des Verdichters. Es können unterschiedliche Sperrgasraumdrücke in verschiedenen Sperrgasräumen eingestellt werden. Insbesondere wenn eine Wellendichtungsanordnung zwei Sperrgasräume aufweist, wird der Sperrgasraumdruck im inneren Sperrgasraum vorzugsweise höher als im äußeren Sperrgasraum eingestellt. Dadurch wird gewährleistet, dass ein Sperrgasstrom stets vom Gaszufluss in Richtung des Ölraums strömt, d.h. vom Sperrgasraum kommend, durch die äußere Dichtung hindurch und von der äußeren Dichtung in den Ölraum hinein. Dadurch wird eine Strömung von kontaminiertem Gas (und von Öl) aus dem Ölraum durch die Wellendichtungsanordnung hindurch in den Verdichtungsraum hinein ausgeschlossen.

In einer alternativen Ausführungsform weist der Verdichter ein als Druckminderungsventil ausgeführtes Sperrgas-Zufuhrventil auf, das insbesondere in einer Sperrgas-Zufuhrleitung zu dem mindestens einen Sperrgasraum angeordnet ist. Ein (mechanisches) Druckminderungsventil kann eine Membran umfassen. Ein Druckminderungsventil könnte aber auch als Magnetventil ausgeführt sein. Das Druckminderungsventil stellt insbesondere einen ausreichend hohen Ausgangsdruck bereit, um den Sperrgasraumdruck p_{SGR} im Sperrgasraum so einzustellen, dass der Sperrgasraumdruck p_{SGR} höher ist als der Ölraumdruck p_{OR} im Ölraum. Der Ausgangsdruck des Druckminderungsventils ist insbesondere höher eingestellt als der (gewünschte) Ölraumdruck p_{OR} im Ölraum. Bei Einsatz eines (mechanischen) Druckminderungsventils kann auf eine aufwändige (elektonische) Steuerung für ein (elektronisch) steuerbares Sperrgas-Zufuhrventil verzichtet werden. Insofern stellt ein Druckminderungsventil eine kostengünstige Alternative dar, insbesondere für einfachere, vorzugsweise einstufige, Bauformen eines trockenverdichtenden Verdichters. Ein Druckminderungsventil hat allerdings den Nachteil, dass unter Umständen mehr Sperrluft zugeführt wird als eigentlich erforderlich wäre, beispielsweise wenn der Verdichter im Lastlauf läuft und der Leckagegasstrom eigentlich ausreichend groß wäre, um den erforderlichen Sperrgasraumdruck p_{SGR} bereitzustellen.

In einer Ausführungsform weist mindestens ein Sperrgasraum eine Unterdrucksicherung auf, die vorzugsweise als ein zum Sperrgasraum hin öffnendes Rückschlagventil ausgeführt ist. Insbesondere umfasst die Unterdrucksicherung ein Ventil, das den jeweiligen Sperrgasraum bei Unterschreiten eines Mindestdrucks, vorzugsweise sobald der Druck in mindestens einem Sperrgasraum geringer ist als der Umgebungsdruck, vorzugsweise zur Umgebung des Verdichtergehäuses hin, öffnet. Jedem Sperrgasraum kann eine individuelle Unterdrucksicherung zugeordnet sein. Eine Unterdrucksicherung kann beim drucklosen Anfahren des Verdichters oder bei Störfällen (Stromausfall) den Umgebungsdruck (Atmosphärendruck) als Mindestdruck in den Sperrgasräumen bereitstellen.

In einer Ausführungsform sind Ölräume mehrerer Verdichterstufen, insbesondere ein Ölraum einer ersten Verdichterstufe und ein Ölraum einer zweiten Verdichterstufe, vorzugsweise über ein gemeinsames Getriebegehäuse und/oder über Verbindungsleitungen, miteinander verbunden. Insbesondere ist der saugseitige Ölraum der ersten Verdichterstufe mit dem saugseitigen Ölraum der zweiten Verdichterstufe oder druckseitige Ölraum der ersten Verdichterstufe mit dem druckseitigen Ölraum der zweiten Verdichterstufe über ein gemeinsames Getriebegehäuse miteinander verbunden. Im Getriebegehäuse kann (ganz oder teilweise) das Antriebsgetriebe der Verdichterrotoren angeordnet sein.

In einer weiteren Ausführungsform weist der Verdichter mehrere Verdichterstufen auf, wobei mindestens ein Sperrgasraum einer, vorzugsweise auf einem niedrigeren ersten Druckniveau arbeitenden, ersten Verdichterstufe mit mindestens einem Sperrgasraum einer, vorzugsweise auf einem höheren zweiten Druckniveau arbeitenden, zweiten Verdichterstufe, vorzugsweise über eine Sperrgas-Verbindungsleitung, verbunden ist. Die Sperrgasräume der ersten und zweiten Verdichterstufe sind insbesondere derart miteinander verbuden, dass ein, vorzugsweise aus der druckseitigen Wellendichtungsanordnung der zweiten Verdichterstufe abließender, Leckagegasstrom der zweiten Verdichterstufe zu mindestens einem Sperrgasraum der ersten Verdichterstufe strömen kann. Auf diese Weise wird das Druckgefälle eines zweistufigen (oder mehrstufigen) Verdichters zur Erzeugung von Sperrluft für die Verdichterstufe mit dem niedrigeren Druckniveau genutzt. Da das Volumen des Leckagegasstroms mit dem Druckniveau der Verdichterstufen steigt, steht insbesondere bei mehreren Verdichterstufen je nach Betriebebedingungen, vorzugsweise zumindest im Lastlauf, ausreichend viel Sperrluft zur Verfügung, um eine Sperrgaszuführung zumindest zeitweise, d.h. für bestimmte Betriebszustände, abzuschalten und die Versorgung mit Sperrluft für alle Verdichterstufen alleine durch den Leckagegasstrom der höheren (höchsten) Verdicherstufe(n) zu gewährleisten.

Die genannte Aufgabe wird außerdem insbesondere gelöst durch ein Verfahren zur Ölabscheidung für einen trockenverdichtenden Verdichter mit einer oder mehreren Verdichterstufen (2, 3) zur Erzeugung eines verdichteten Gases, insbesondere zur Erzeugung von Druckluft, insbesondere für einen erfindungsgemäßen trockenverdichtenden Verdichter, mit einer ölgeschmierten Rotorlagerung mindestens eines Verdichterrotors des Verdichters, wobei das Verfahren folgende Schritte aufweist:
- Einleiten eines Leckagegasstroms, insbesondere eines Sperrgasstroms, der aus einer einem Wellenabschnitt des Verdichterrotors zugeordneten Wellendichtungsanordnung abfließt, in einen Ölraum eines Verdichtergehäuses des Verdichters, in dem mindestens ein ölgeschmiertes Lager der Rotorlagerung aufgenommen ist,
- Bereitstellen eines Ölraumdrucks p_{OR} im Ölraum, der
   ∘ den Umgebungsdruck p₀ des Verdichtergehäuses um eine Ölabscheidedruckdifferenz Δp übersteigt, die vorzugsweise mindestens 20 mbar beträgt.
- Zuführen eines Gasstroms vom Ölraum zu einem Ölabscheider.

Dem Verfahren liegt die Idee zugrunde, durch das Einleiten eines Leckagegasstroms in den Ölraum einen Überdruck im Ölraum gegenüber der Umgebung zu erzeugen, der zur Ölabscheidung genutzt werden kann. Das alternative oder zusätzliche Einleiten eines Sperrgasstroms in den Ölraum kann ebenfalls einen Überdruck im Ölraum erzeugen oder dazu beitragen. Der durch den zufließenden Leckagegas- und/oder Sperrgasstrom erzeugte Ölraumdruck stellt insbesondere eine ausreichend große Druckdifferenz (Ölabscheidedruckdifferenz Δp) bereit, um einen dem Ölabscheider zugeführten Öl-/Gasstrom aus dem Ölraum den Ölabscheider durchströmen zu lassen. Insbesondere kann auf eine Druckabsenkung auf der Ausströmseite des Ölabscheiders verzichtet werden. Das erfindungsgemäße Verfahren hat ähnliche Wirkungen und Vorteile, die bereits im Zusammenhang mit den erfindungsgemäßen trockenverdichtenden Verdichtern beschrieben wurden. Das Verfahren kann einige oder alle verfahrenstechnischen Merkmale umsetzen, die im Zusammenhang mit den trockenverdichtenden verdichten beschrieben sind.

Das Zuführen eines Gasstroms vom Ölraum zu einem Ölabscheider umfasst insbesondere das Beaufschlagen einer Einströmseite des Ölabscheiders (im Wesentlichen, d.h. bis auf geringe dissipative Druckverluste, etwa in Verbindungsleitungen oder durch Strömungsumlenkungen) mit dem Ölraumdruck. Das Verfahren umfasst insbesondere einen Schritt zum Abscheiden von Öl aus dem Gasstrom im Ölabscheider. Insbesondere wird als weiterer Verfahrensschritt der gereinigte Gasstrom von der Ausströmseite des Ölabscheiders in die (freie) Umgebung des Verdichtergehäuses weggeführt. Die Wellendichtungsanordnung ist, neben dem üblichen Zweck zur Abdichtung des Verdichtungsraumes gegen Gasaustritt und Gaseintritt, insbesondere zur Abdichtung eines Verdichtungsraums des Verdichters gegen Öleintritt aus dem Ölraum ausgebildet und vorzugsweise zwischen dem ölgeschmierten Lager und einem Verdichtungsraum des Verdichtergehäuses angeordnet.

Eine Ausführungsform des Verfahrens umfasst mindestens einen der folgenden Schritte:
- Erfassen des Ölraumdrucks p_{OR} durch mindestens einen Drucksensor; und/oder
- Erfassen eines Sperrgasraumdrucks p_{SGR}, insbesondere in mindestens einem Sperrgasraum der Wellendichtungsanordnung und/oder in einem Sperrgas-Puffervolumen einer Sperrgaszuführung, durch mindestens einen Drucksensor; und/oder
- Bestimmen des Differenzdrucks zwischen dem Sperrgasraumdruck p_{SGR}, insbesondere des Sperrgasraumdrucks p_{SGR} in mindestens einem Sperrgasraum der Wellendichtungsanordnung und/oder in einem Sperrgas-Puffervolumen einer Sperrgaszuführung, und dem Ölraumdruck p_{OR},
wobei die Wellendichtungsanordnung insbesondere eine dem ölgeschmierten Lager zugewandte, insbesondere berührungslose, äußere Dichtung und eine dem Verdichtungsraum zugewandte, insbesondere berührungslose, innere Dichtung aufweist und der Sperrgasraum insbesondere zwischen der äußeren Dichtung und der inneren Dichtung zur Aufnahme von Sperrgas ausgebildet ist; und/oder
- Überwachen des Sperrgasraumdrucks p_{SGR} und/oder des Ölraumdrucks p_{OR} und/oder des Differenzdrucks zwischen dem Sperrgasruck p_{SGR} und dem Ölraumdruck p_{OR} durch eine Steuereinheit.

Der Differenzdruck kann durch Erfassen (Messen) durch einen Sensor, insbesondere einen Differenzdruckmessumformer, oder durch Berechnung basierend auf dem Ölraumdruck p_{OR} und dem Sperrgasraumdruck p_{SGR} bestimmt werden.

Eine Ausführungsform des Verfahrens umfasst als weiteren Schritt das Einstellen, insbesondere variable Einstellen, vorzugsweise Regeln, eines Sperrgasraumdrucks p_{SGR} in mindestens einem Sperrgasraum der Wellendichtungsanordnung durch Zuführen von Sperrgas in den Sperrgasraum, insbesondere in Abhängigkeit eines Betriebszustands des Verdichters, so dass der Sperrgasraumdruck p_{SGR} höher ist als der Ölraumdruck p_{OR} im Ölraum. Der Sperrgasraumdruck p_{SGR} wird insbesondere durch Regeln eines Sperrgas-Zufuhrventils einer Sperrgaszuführung in den mindestens einen Sperrgasraum geregelt. Das Sperrgas-Zufuhrventil kann von einer Steuereinheit angesteuert, vorzugsweise stufenlos geregelt, werden. Alternativ kann der Sperrgasraumdruck p_{SGR} über ein (mechanisches) Druckminderungsventil eingestellt werden. Sperrgas kann aus einer externen Sperrgasversorgung oder einer internen Sperrgasversorgung des Verdichters zugeführt werden.

Eine Ausführungsform des Verfahrens umfasst als weiteren Schritt das Zuführen von Sperrgas in den Sperrgasraum, so dass der Sperrgasraumdruck p_{SGR} im Sperrgasraum höher ist als der Ölraumdruck p_{OR} im Ölraum, während der Verdichter im Leerlauf betrieben wird und/oder während instationärer Betriebszustände des Verdichters, vorzugsweise während eines Anfahrzustands oder eines Ausschaltzustands des Verdichters, und/oder während der Verdichter im Lastlauf betrieben wird, insbesondere wenn der Verdichter ein einstufiger Verdichter ist. Insbesondere bei einstufigen Verdichtern kann der erzeugte Leckagegasstrom nicht für ein ausreichendes Sperrluftvolumen genügen, um den erforderlichen Sperrgasraumdruck p_{SGR} zu bereitszustellen, so dass auch im Lastlauf eine (interne oder externe) Sperrgaszuführung erforderlich ist. Für zwei-oder mehrstufige Verdichter kann die Sperrgaszuführung aufgrund der größeren auftretenden Leckageluftströme zumindest im Lastlauf hingegen entbehrlich sein.

Eine Ausführungsform des Verfahrens umfasst das Zuführen eines Leckagegasstroms aus mindestens einem Sperrgasraum einer, vorzugsweise auf einem höheren zweiten Druckniveau arbeitenden, zweiten Verdichterstufe in mindestens einen Sperrgasraum einer, vorzugsweise auf einem niedrigeren ersten Druckniveau arbeitenden, ersten Verdichterstufe, vorzugsweise über eine die die Sperrgasräume verbindende Sperrgas-Verbindungsleitung, wobei der Leckagegasstrom vorzugsweise aus einer druckseitigen Wellendichtungsanordnung der zweiten Verdichterstufe in einen druckseitigen Sperrgasraum der zweiten Verdichterstufe abfließt. Dadurch wird das Druckgefälle eines zweistufigen (oder mehrstufigen) Verdichters zur Erzeugung von Sperrluft für die Verdichterstufe mit dem niedrigeren Druckniveau genutzt.

Ausführungsbeispiele der Erfindung werden nachfolgend anhand der Zeichnungen näher erläutert. Hierbei zeigen:
- Figur 1: eine schematische Darstellung einer ersten Ausführungsform eines erfindungsgemäßen trockenverdichtenden Verdichters;
- Figur 2: eine schematische Darstellung einer zweiten Ausführungsform eines erfindungsgemäßen trockenverdichtenden Verdichters mit saugseitigen und druckseitigen Wellendichtungsanordnungen mit jeweils zwei Sperrgasräumen;
- Figur 3: eine schematische Darstellung einer dritten Ausführungsform eines erfindungsgemäßen trockenverdichtenden Verdichters mit einer externen Sperrgasversorgung und einem Sperrgas-Puffervolumen;
- Figur 4: eine schematische Darstellung einer vierten Ausführungsform eines erfindungsgemäßen trockenverdichtenden Verdichters mit zwei Verdichtersstufen;
- Figur 5: eine schematische Darstellung einer fünften Ausführungsform eines erfindungsgemäßen trockenverdichtenden Verdichters mit zwei Verdichtersstufen und mehreren Sperrgasdrücken.

In der nachfolgenden Beschreibung der Erfindung werden für gleiche und gleich wirkende Elemente dieselben Bezugszeichen verwendet.

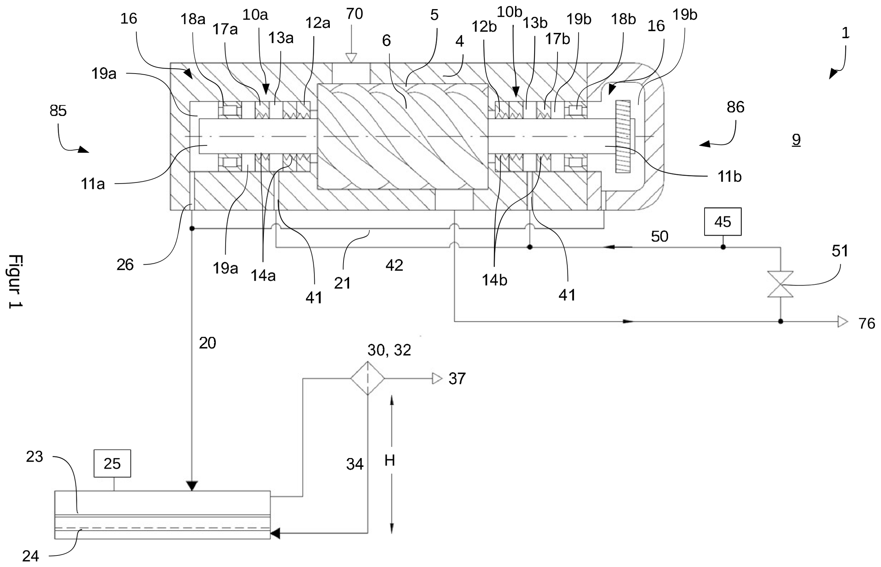

Die nachfolgend mit Bezug auf die Figuren 1 bis 5 beschriebenen Ausführungsformen der Erfindung illustrieren jeweils unterschiedliche Aspekte der Erfindung. Die gezeigten Ausführungsformen sind, soweit nicht technisch widersprüchlich, miteinander kombinierbar. Insbesondere sind einzelne beschriebene Komponenten oder Systeme der erfindungsgemäßen trockenverdichtenden Verdichter, wie Drucksensoren, die Ausführung des Ölabscheiders (Mehrstufigkeit, Ausführung der Abscheidestufen), die Ölrückführung, Sperrgaszuführung und Sperrgaseinspeisung, Unterdrucksicherung sowie insbesondere die Steuereinheit und verfahrenstechnische Steuerung in jeder Ausführungsform ergänzbar, zwischen den Ausführungsformen austauschbar und miteinander kombinierbar, soweit nicht technisch widersprüchlich. Sofern nicht anders angegeben, bezieht sich der den Bezugszeichen nachgestellte Buchstabe "a" auf die Saugseite 85 und der Buchstabe "b" auf die Druckseite 86 des Verdichters 1. Zum Beispiel bezeichnet 19a den saugseitigen Ölraum und 19b den druckseitigen Ölraum.

Figur 1 zeigt einen (einstufigen) trockenverdichtenden bzw. ölfrei verdichtenden Verdichter 1 mit ölgeschmierten Lagern 18a, 18b in einem Verdichtergehäuse 4. Der Verdichter 1 saugt über den Lufteinlass 70 auf der Saugseite 85 Luft als zu verdichtendes Gas an, verdichtet die Luft und fördert die Druckluft von der Druckseite 86 über den Druckluftauslass 76 zur nicht dargestellten Anwendung, typischerweise in ein Druckluftnetz eines Verbrauchers.

Die Lager 18a, 18b der Rotorlagerung 16 sind mit Öl geschmiert und in den Ölräumen 19a, 19b des Verdichtergehäuses 4 angeordnet, in denen sich das Schmieröl mit Gas zu einem Gas-Luft-Gemisch in Form eines Ölnebels vermischt, der Aerosole aus dem Schmieröl enthält. Der Verdichtungsraum 5, in dem das Gas mittels Rotation eines oder mehrerer Verdichterrotoren 6 komprimiert wird, soll jedoch frei von Öl bleiben. Hierzu sind die Wellendichtungsanordnungen 10a, 10b mit inneren Dichtungen 12a, 12b und äußeren Dichtungen 17a, 17b gegenüber den Ölräumen 19a, 19b abgedichtet. Die Dichtungen 17a, 17b und 12a, 12b sind, bedingt durch hohe Umfangsgeschwindigkeiten und Temperaturen im Betrieb berührungslos und nicht völlständig dicht. Am Umfang der Wellenabschnitte 11a, 11b des Verdichterrotors 6, die den Wellendichtungsanordnungen 10a, 10b zugeordnet sind, verbleibt ein schmaler Dichtspalt 14a, 14b, durch den hindurch in Abhängigkeit des Druckgefälles ein Gasstrom in Richtung des Verdichtungsraums 5, oder umgekehrt, strömen kann. Dieser Gasstrom entsteht aufgrund der Leckage der Dichtungen 17a, 17b und 12a, 12b. Es darf aber kein Schmiermittel in den Verdichtungsraum 5 oder die Umgebung 9 des Verdichtergehäuses 4 gelangen, um die Reinheit des verdichteten Gases nicht zu gefährden.

Gemäß einer Ausführungsform der Erfindung wirkt ein Sperrgassystem dem Eintreten von Schmiermittel in den Verdichtungsraum 5 entgegen. Zwischen der inneren Dichtung 12a, 12b und der äußeren Dichtung 17a, 17b ist je ein Sperrgasraum 13a, 13b angeordnet. Die Sperrgasräume 13a, 13b von saugseitigen bzw. druckseitigen Wellendichtungsanordnungen 10a und 10b sind über Sperrgas-Verbindungsleitungen 42 miteinander verbunden, die auch als Bohrungen im Verdichtergehäuse 4 ausgeführt sein können. Aus den Sperrgasräumen 13a, 13b fließen bei entsprechendem Druckgefälle Sperrgasströme in die Ölräume 19a, 19b. Die Ölräume 19a, 19b sind jeweils so gegenüber der Umgebung 9 abgedichtet, dass sie einen Ölraumdruck p_{OR} aufbauen und halten können, der höher ist als der Umgebungsdruck p₀, d.h. einen Überdruck.

Über die innere Dichtung 12b auf der Druckseite 86 gibt es meist einen Luftleckagestrom vom Verdichtungsraum 5 in den Sperrgasraum 13b. Bei höherem Druck im Verdichtungsraum 5 ist der Luftleckagestrom höher. Daher sind die Luftleckageströme an den inneren Dichtungen 12a und 12b unterschiedlich. Auf der Saugseite 85 ist die Leckageströmung über die innere Dichtung 12a kleiner als auf der Druckseite 12b und kann sich in umgekehrte Richtung umdrehen. Auf der Saugseite 85 kann auch im Lastlauf etwas Sperrgas über die inneren Dichtungen 12a in den Verdichterraum 5 gesaugt werden, da hier der Druck über einen großen Teil des Umfanges der Verdichterrotoren 6 geringer ist als im Sperrgasraum 13a. Im normalem Lastbetrieb wird durch die Leckagen der inneren Dichtung 12a und vor allem der inneren Dichtung 12b der Sperrgasraumdruck p_{SGR} in den verbundenen Sperrgasräumen 13a, 13b aufrechterhalten.

In bestimmten Betriebszuständen, z.B. bei geringen Verdichtungsdrücken oder instationären Vorgängen wird den in die Sperrgasräumen 13a, 13b zusätzlich über eine Sperrgas-Zufuhrleitung 50 und ein geregeltes Sperrgas-Zufuhrventil 51 Sperrgas zugeführt. Das Sperrgas-Zufuhrventil 51 kann, vor allem für kostengünstigere Bauformen des Verdichters 1, auch als ein mechanisches Druckminderungsventil ausgeführt sein, wobei auch auf eine nachfolgend beschriebene Steuereinheit 60 verzichtet werden könnte. In der Ausführung nach Figur 1 wird das zusätzliche Sperrgas (Sperrluft) aus dem zum Druckluftauslass 76 geführten verdichteten Druckluftstrom abgezweigt und als interne Sperrgaseinspeisung über das Sperrgas-Zufuhrventil 51 zu den Sperrgas-Zufuhrkanälen 41 geleitet. Der Sperrgasraumdruck p_{SGR} in den Sperrgasräumen 13a, 13b wird so im Betrieb immer höher eingestellt als der Ölraumdruck p_{OR} in den über die Verbindungsleitung 21 miteinander verbundenen Ölraumen 19a, 19b. Durch das beschriebene Druckgefälle von den Sperrgasräumen 13a, 13b hin zum Ölraum 19a, 19b (p_{OR} < p_{SGR}) werden (im Betrieb) Luft-Leckagen über die äußeren Dichtungen 17a, 17b von den trockenen Sperrgasräumen 13a, 13b in die Ölräume 19a, 19b hinein erzeugt, die als Sperrgasströme den Ölräumen 19a, 19b zufließen. Aufgrund dieser Druckdifferenz über alle äußeren Dichtungen 17a und 17b wird der Schmierstoff, d.h. das Öl, trotz Dichtspalt 14a, 14b in den Ölräumen 19a, 19b gehalten und gleichzeitig ein Sperrgasstrom, der zugeführte Sperrluft und Leckageluft aus dem Verdichtungsraum 5 beinhalten kann, in die Ölräume 19a, 19b gedrückt, wo sich der Ölraumdruck p_{OR} aufbaut bzw. herrscht. Der Sperrgasraumdruck p_{SGR} wird durch den Drucksensor 45 erfasst. Der Ölraumdruck p_{OR} wird durch den Drucksensor 25 erfasst. Die gemessenen Druckwerte für p_{SGR} und p_{OR} werden an die Steuereinheit 60 übertragen, die daraus den Differenzdruck bestimmt (in Figur 1 nicht dargestellt).

Gemäß einem weiteren Aspekt der Erfindung, gelangt der mit Öl kontaminierte Leckage- bzw. Sperrgasstrom nicht ungereinigt aus den Ölräumen 19a, 19b über den Luftauslass 37 in die Umgebung 9 oder sogar in den Ansaugbereich des Lufteinlass 70 des Verdichters 1, sondern wird durch einen Gasabfluss 26 über eine Gasabflussleitung 20 einem Ölabscheider 30 zugeführt. Der Gasabfluss 26 ist als eine Durchgangsöffnung im Verdichtergehäuse 4 ausgeführt. Der Ölabscheider 30 kann mehrere, vorzugsweise drei, Abscheidungsstufen umfassen. Im Ölabscheider 30 erfolgt eine Trennung des Öls (Öltröpfchen und Ölaerosole) von der Luft. Der Ölabscheider 30 umfasst in dieser Ausführung einen Feinabscheider 32, nämlich einen dichten Koaleszenzfilter. Das abgeschiedene Öl sammelt sich auf der trockenen Seite des Filterelementes.

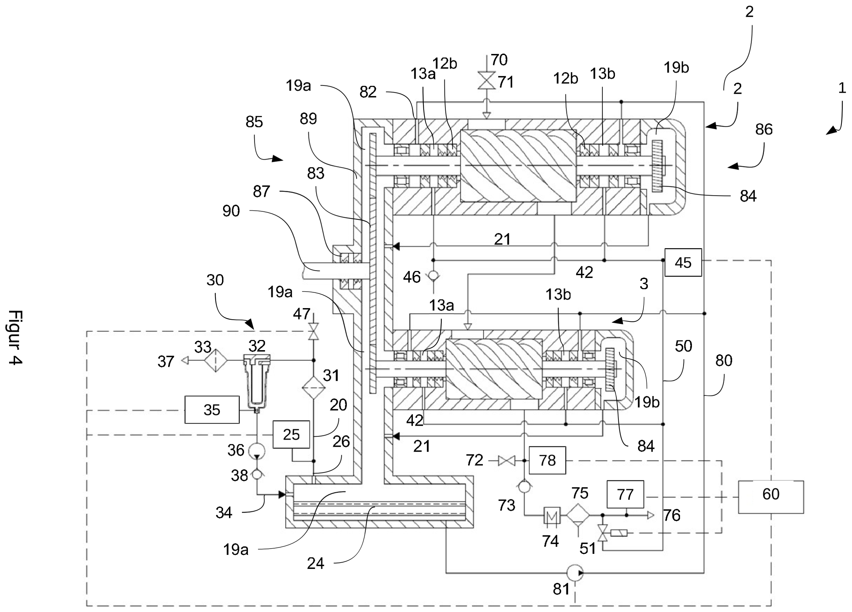

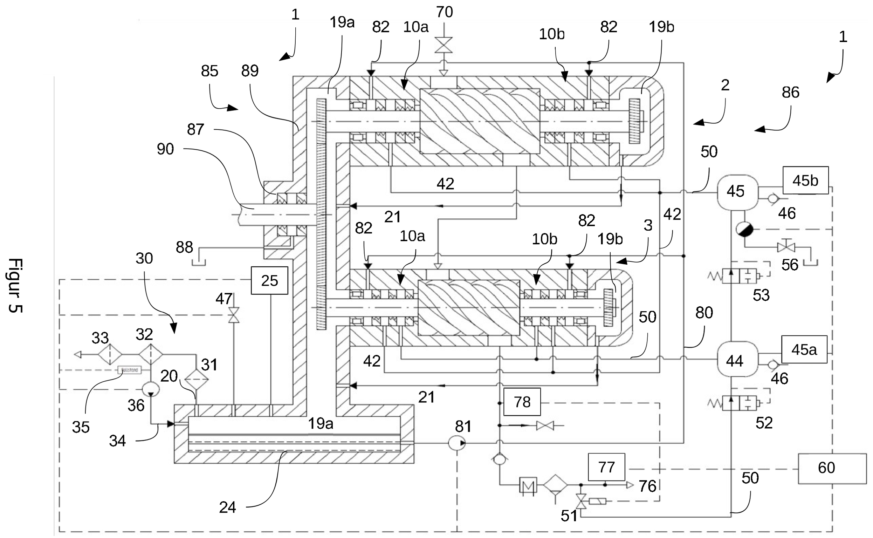

Die Rückführung des Öls erfolgt in der gezeigten Ausführung über die Schwerkraft und eine für alle Betriebszustände, inklusive der Druckverhältnisse im Lastbetrieb, ausreichende Höhendifferenz H der Ölrückführleitung 34. Die Ölrückführleitung 34 leitet das abgeschiedene Öl in den Ölsumpf 24 auf ein Niveau unterhalb des Ölspiegels 23, wodurch verhindert wird, dass Ölnebel aus der Gasabflussleitung 20 unter Umgehung des Ölabscheiders 30 über die Ölrückführleitung 34 strömt. Anstelle oder zusätzlich zu einer Höhendifferenz kann eine Ölpumpe 36 (siehe Fig. 4 und 5) eingesetzt werden. Die Höhendifferenz H bzw. die Förderleistung der Ölpumpe 36 ist entsprechend dem maximalen Differenzdruck des Ölabscheiders 30, insbesondere des Koaleszenzfilterelements des Feinabscheider 32, gewählt, der beispielsweise 100 bis 300 mbar betragen kann.

Der durch den Zufluss der Sperrluft und Leckageluft in den Ölraum 19a, 19b aufgebaute Ölraumdruck p_{OR} übersteigt den Umgebungsdruck p₀ des Verdichtergehäuses um eine ausreichend große Ölabscheidedruckdifferenz Δp, die erforderlich ist, damit der aus dem Gasabfluss 26 ausströmende Luftstrom die Druckdifferenz des Ölabscheiders 30 überwindet. Falls der Gasstrom einen Druckabfall vom Ölraum 19a, 19b über die Einströmseite zur Ausströmseite des Ölabscheiders 30 von z.B. 200 mbar überwindet, beispielsweise als Druckdifferenz über ein Koaleszenzfilterelement des Feinabscheiders 32, entspricht das bei atmosphärischem Druck als Umgebungsdruck p₀ von 1 bar auf der Ausströmseite des Ölabscheiders 30 einer Ölabscheidedruckdifferenz Δp von 20%, um die der Ölraumdruck p_{OR} den Umgebungsdruck p₀ mindestens übersteigt.

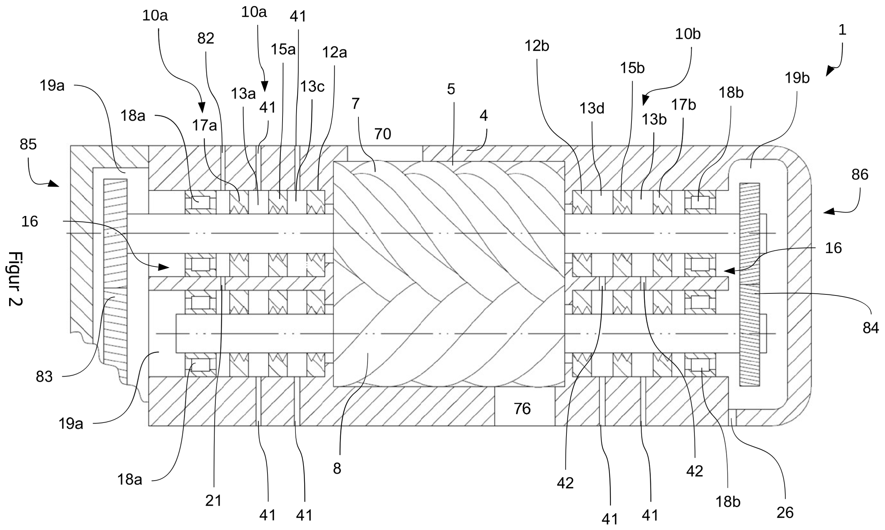

Figur 2 zeigt eine Detaildarstellung eines Verdichters 1, aus der der Aufbau einer Verdichterstufe eines Schraubenverdichters hervorgeht. In dieser Perspektive sind zwei Verdichterrotoren 7, 8 zu erkennen, die schraubenförmig ineinandergreifen und gemeinsam ein Prozessgas (Luft) verdichten. Dabei wird der Verdichterrotor 8 über das Synchrongetriebe 84 von dem Verdichterrotor 7 angetrieben.

Zwischen den inneren Dichtungen 12a, 12b und äußeren Dichtungen 17a, 17b sind je zwei Sperrgasräume 13a, 13c bzw. 13 b, 13d dargestellt, die über zusätzliche mittlere Dichtungen 15a, 15b voneinander getrennt sind. Die Dichtungen 12a, 12b, 15a, 15b, 17a, 17b sind berührungslose Wellendichtungen, da die Umfangsgeschwindigkeit und Temperatur für berührende Dichtungen auf Dauer zu hoch sind. Die Dichtungen 12a, 12b, 15a, 15b, 17a, 17b können eine Förderwirkung haben. Hierzu kann z.B. ein Gewindegang vorhanden sein, wodurch im Betrieb zusätzlich Leckagen in Richtung der Ölräume, 19a, 19b gefördert werden.

Über den Schmieröleintritt 82 gelangt Öl als Schmierstoff zu den ölgeschmierten Lagern 18a, 18b. Die Ölräume 19a, 19b sind über die Verbindungsleitung 21 miteinander verbunden. Der Ölraum 19b weist einen Gasabfluss 26 zum Anschluss der gemeinsamen Gasabflussleitung 20 zur Zuführung des Gasstroms mit dem Ölnebel zu einem Ölabscheider 30 (in Fig. 2 nicht dargestellt).

Auf der Saugseite 85 der Verdichterrotoren 7 und 8 haben die Sperrgasräume 13a, 13c der beiden Wellendichtungsanordnungen 10a, 10b getrennte Sperrgaszufuhrkanäle 41, so dass an dieser Seite insgesamt vier Sperrgaszufuhrkanäle 41 vorhanden sind. Auf der Druckseite 86 sind die Sperrgasräume 13b, 13d der beiden Verdichterrotoren 7 und 8 beispielhaft über Durchgangsbohrungen innerhalb des Verdichtergehäuses 4 über eine Sperrgas-Verbindungsleitung 42 miteinander verbunden, so dass es auf der Druckseite 86 insgesamt zwei Sperrgaszufuhrkanäle 41 gibt.

Jeder der Verdichter 1 in den Figuren 1, 3, 4 und 5 kann mit saugseitigen und druckseitigen Wellendichtungsanordnungen 10a, 10b mit jeweils zwei Sperrgasräumen 13a, 13c bzw. 13b, 13d gemäß Figur 2 ausgeführt sein. In anderen Figuren ist die Perspektive so gewählt, dass zur besseren Übersichtlichkeit nur ein Verdichterrotor erkennbar ist. Außer ein ölfreie Schraubenkompressor könnte der Verdichter 1 auch ein ölfreie verdichtendes Schraubengebläse, Wälzkolbengebläse oder ein Drehzahnkompressor sein.

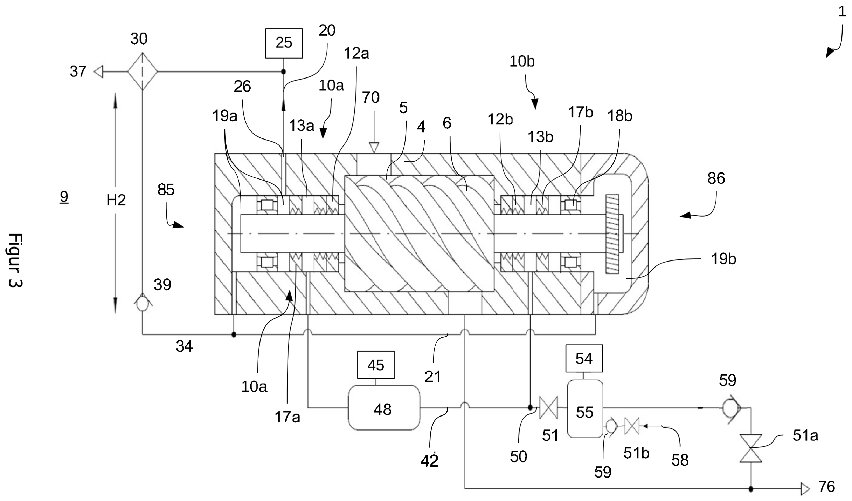

In Figur 3 ist ein ähnlicher Verdichter 1 wie in Figur 1 dargestellt, wobei im Folgenden die Unterschiede erläutert werden:
Der Verdichter 1 weist ein Sperrgas-Puffervolumen 48 auf, das als ein Gasdruckbehälter oder als ein in das Verdichtergehäuse 4 integrierter Hohlraum ausgeführt sein kann. Die Sperrgasraum sind durch eine Sperrgas-Verbindungsleitung 42 miteinander verbunden, die durch das Sperrgas-Puffervolumen 48 mit erweitertem Strömungsquerschnitt führt. Durch das Sperrgas-Puffervolumen 48 können Druckschwankungen im Betrieb des Verdichters 1 ausgeglichen und der Sperrraumdruck p_{SGR} nachgeregelt werden. Gleichzeitig erfüllt dieser Sperrgas-Puffervolumen 48 durch eine vergrößerte Oberfläche eine Kühlfunktion für das Sperrgas. Der Sperrgas-Puffervolumen 48 ist so gestaltet, dass er eine Abscheidewirkung hat und flüssige oder feste Verunreinigungen abscheidet und sammelt, bevor das Sperrgas anderen Sperrgasräumen zugeführt wird. Die Abscheidung kann durch Umlenkungen für das Sperrgas, eine reduzierte Strömungsgeschwindigkeit innerhalb des Puffervolumens und/oder durch ein (grobes) Demistergestrick.

Außerdem ist eine Sperrgaseinspeisung 58 als externe Sperrgasquelle gezeigt, die zusätzlich zu der internen Sperrgasquelle aus dem Druckluftauslass 76 über das Sperrgas-Zufuhrventil 51a zur Bereitstellung von Sperrgas dient. Im Sperrgas-Puffervolumen 55, z.B. einem Pufferbehälter, wird ein bestimmtes Volumen an Sperrgas gespeichert, um bei instationären Betriebszuständen des Verdichters 1, z.B. für sicheres Anfahren ohne Druck am Druckluftauslass 76 oder sicheres Entlüften (Abfahren) bei Stromausfall, über das regelbare Sperrgas-Zufuhrventil 51 eine ausreichende Sperrgaszufuhr bereitstellen zu können. Die Rückschlagventile 59 verhindern, dass Gas von einer Sperrgasquelle zur anderen Sperrgasquelle überströmt. Die einzelnen Sperrgasquellen können über die Sperrgas-Zufuhrventile 51, 51a und 51b wahlweise einzeln oder gemeinsam abhängig vom erfassten Sperrgasraumdruck p_{SGR} oder weiteren Betriebsparametern genutzt werden. Bei Bedarf kann auf diese Weise Sperrgas über das Sperrgas-Zufuhrventil 51 dem Sperrgas-Puffervolumen 48 und weiter den Sperrgasräumen 13a, 13b zugeführt werden. Eine, insbesondere externe, Sperrgaseinspeisung 58 und Sperrgas-Puffervolumen 48, 55 können unabhängig voneinander eingesetzt werden.

Der Druck p_{SLR} im Sperrgas-Puffervolumen 48, in der bzw. den Sperrgas-Verbindungsleitung(en) 42 und in den Sperrgasräumen 13 wird über den Drucksensor 45 erfasst. Der Ölraumdruck p_{OR} in den über die Verbindungsleitung 21 verbundenen Ölräumen 19a, 19b, der Gasabflussleitung 20, sowie optional im Ölsumpf 24 (in Fig. 3 nicht dargestellt) wird über den Drucksensor 25 erfasst. Der Druck im Sperrgas-Puffervolumen 55 wird durch den Drucksensor 54 erfasst. Die Drucksensoren 25, 45, 54 sowie die Sperrgas-Zufuhrventile 51, 51a, 51b sind mit einer Steuereinheit 60 verbunden (nicht dargestellt).

Im Betrieb wird das Öl im unteren Bereich des Ölabscheiders 30 gesammelt. Die Rückführung erfolgt hier im Stillstand des Verdichters bei ausgeglichenen Drücken zwischen Ölabscheider 30 und Ölraum 19a, 19b über die Schwerkraft und ausreichende Höhendifferenz H2 über die Ölrückführleitung 34 in die Ölraume 19a, 19b. Da im vorliegenden Ausführungsbeispiel die Höhendifferenz H2 für eine sichere Verhinderung einer Ölrückströmung für die im Lastbetrieb auftretenden Druckverhältnisse nicht alleine ausreicht, ist in der Ölrückführleitung 34 ein Rückschlagventil 39 vorgesehen, das eine Umgehung des Filterelements des Ölabscheiders 30 zuverlässig verhindert. Die Rückführung findet deshalb nur bei abgesenktem Druckniveau, zum Beispiel bei Stillstand oder unter Umständen im Leerlauf des Verdichters 1, statt. Bei der Ausführungsform gemäß Figur 1 mit ausreichend großer Höhendifferenz H findet die Ölrückführung hingegen auch im Lastbetrieb statt.

Figur 4 zeigt einen zweistufigen Verdichter, wobei die erste Verdichterstufe 2 und die zweite Verdichterstufe 3 in Reihe geschaltet sind, um höhere Enddrücke zu erzielen. Hier sind die Sperrgasräume der zweite Verdichtungsstufe 3 mit Sperrgasräumen der ersten Verdichtungsstufe 2 verbunden. So können Leckagen der inneren Dichtungen 12a, 12b der zweiten Verdichterstufe 3 zur

Beaufschlagung der Sperrgasräume 13a, 13b der ersten Verdichterstufe 2 genutzt werden.

Es ist zusätzlich ein Einlassventil 71 dargestellt. Hierüber kann der Druck am Eintritt der ersten Verdichterstufe 2 reduziert werden und gleichzeitig über das Entlastungsventil 72 die Luft im Leerlauf des Verdichters abgeblasen werden. Über das Rückschlagventil 73 wird eine Rückströmung vom Druckluftauslass 76 verhindert. Leerlauf ist teilweise erforderlich, um ein leichteres Anlaufen des Verdichters zu ermöglichen und um die Motorstarthäufigkeit bei geringem Luftbedarf zu begrenzen. In Figur 5 ist außerdem ein Luftdrucksensor 77 für den Anlagenenddruck (d.h. an der Schnittstelle zum Druckluftnetz) und ein Luftdrucksensor 78 für den Verdichtungsenddruck gezeigt.

Ein geschlossenes Einlassventil 71 und geöffnetes Entlastungsventil 72 (Leerlaufabblaseventil), führen dazu, dass im Leerlauf im Verdichterraum der erste Verdichterstufe 2 und auch auf der Saugseite 85 der zweiten Verdichtungsstufe 3 ein Unterdruck anliegt. Dadurch wird über die inneren Dichtungen 12a, 12b aus den Sperrgasräumen 13a, 13b etwas Sperrgas angesaugt, was jedenfalls vorteilhafter ist als die Ansaugung von gegebenenfalls kontaminierter (meist ungefilteter) Luft aus der Umgebung oder von Ölleckagen bei Verdichtern ohne Sperrgas. Stromab der Verdichterstufen 2 und 3 wird die Druckluft in einem Wärmetauscher 74 gekühlt und das anfallende Kondensat über einen Kondensatabscheider 75 abgeschieden und abgeleitet. So kann vorzugsweise gekühlte Luft mit weniger Wassergehalt zum Beaufschlagen der Sperrgasräume 13a, 13b über das Sperrgas-Zufuhrventil 51 verwendet werden.

Die Sperrgasräume 13a, 13b sind mit einer Unterdrucksicherung 46 ausgerüstet, so dass im Störfall eines Unterdruckes Umgebungsluft in die Sperrgasräume 13a, 13b gelangen kann und ein Unterdruck in den Sperrgasräumen 13a, 13b verhindert wird. Die Unterdrucksicherung 46 ist als ein zum Sperrgasraum 13a, 13b hin öffnendes Rückschlagventil ausgeführt.

Die saugseitigen Ölräume 19a der beiden Verdichterstufen 2 und 3 sind über ein gemeinsames Getriebegehäuse 89 miteinander verbunden. Das Getriebegehäuse 89 nimmt das von der Antriebswelle 90 angetriebene ebenfalls ölgeschmierte Antriebsgetriebe 83 auf, das die mit den saugseitigen Wellenabschnitten 11a verbundenen Antriebszanräder zum Antrieb der Verdichterrotoren 6 umfasst. Über Verbindungsleitung 21 sind auch die druckseitigen Ölräume 19b, in denen die Synchrongetriebe 84 angeordnet sind, mit dem gemeinsamen Ölraum 19a verbunden, indem der Ölraumdruck p_{OR} herrscht. Außerdem ist eine Ölumlaufschmierung mit dem Ölsumpf 24, der Schmierölpumpe 81 und den Schmierölleitungen 80 zu den Lagern 18a, 18b und Antriebsgetrieben 83, 84 dargestellt. Für die Abdichtung der Antriebswelle 90 kann aufgrund der geringeren Drehzahl auch eine berührende Antriebswellendichtung 87 zum Einsatz kommen, so dass keine oder weniger Leckagen auftteten. Diese Leckagen können auch gezielt in eine Leckagesammeleinrichtung 88 abgeleitet oder ggf. in den Ölsumpf 24 zurückgeführt werden, wobei der erhöhte Ölraumdruck p_{OR} im Ölsumpf 24 bzw. Ölraum 19a beachtet werden muss.

In Figur 4 ist eine dreistufige Ölnebelabscheidung gezeigt. Die Vorabscheidung der großen Öltröpfchen erfolgt in einem Vorabscheider 31, z.B. durch Drahtgestrick / Demister, wobei das abgeschiedene Öl über Schwerkraft zurück in den Ölraum fließen kann. Anschließend strömt der Ölnebel durch den Feinabscheider 32. Dieser kann ein Koaleszenzfilter 32 sein. Hier ist der Differenzdruck über das Abscheideelement so hoch, dass das abgeschiedene Öl im Betrieb nicht mehr durch Schwerkraft mit akzeptablem Höhenunterschied zurück in den Ölraum gelangt. Hierfür ist eine Ölrückfördereinrichtung in Form der Ölpumpe 36 und einer Rückströmsicherung 38 in der Ölrückführleitung 34 vorhanden, um das Öl auch bei laufendem Dauerbetrieb des Verdichters 1 in den Ölraum 19a zurückfördern zu können. Die Ölpumpe 36 kann als Schlauchpumpe oder Schwingmembranpumpe ausgeführt sein. Über den Füllstandssensor 35 kann die Ölpumpe 36 bei Bedarf eingeschaltet und überwacht werden. Über die Überwachung der Füllzeit und Abpumpzeit können auch die Ölnebelabscheidung und die Ölrückförderung auf korrekte Funktionsfähigkeit überwacht werden. Als dritte Reinigungsstufe wird ein Restölabscheider 33, ausgeführt als Adsorptionsfilter 33, z.B. als Aktivkohlefilter, eingesetzt. Hiermit werden auch das verbleibende Restöl und Öldampf adsorbiert, so dass über den Luftauslass 37 saubere Luft an die Umgebung 9 abgeblasen wird. Im Falle der Prozessgasverdichtung kann das austretende gereinigte Gas auch wieder direkt der Ansaugung des Verdichters 1 zugeführt werden.

In Ausnahmefällen, wie einer Notfall-Entlüftung des Ölraums 19a, 19b, kann der Ölnebel auch über ein Abblaseventil 47 aus dem Ölraum 19a, 19b abgeblasen werden, beispielsweise im Fall eines Überdrucks im Ölraum 19a, 19b oder bei einer Betriebsstörung (Stromausfall). Damit nicht zu viel Öl mit in die Umgebung 9 austritt, wird der Ölnebel über den Vorabscheider 31 mit geringem Druckverlust vorgereinigt.

In Figur 5 ist ein zweistufiger ölfrei verdichtender Verdichter 1 dargestellt. Hier werden die Sperrgasräume mit unterschiedlich hohen Sperrgasraumdrücken p_{SGR}, nämlich mit p_{SGR1} und p_{SGR2}, beaufschlagt. Die Druckniveaus der Sperrgasräume 13a, 13b können über Druckregelventile 52, 53 eingestellt werden. Das Druckventil 52 ist ein Druckminderventil. Durch zwei (oder mehr) verschiedene Druckniveaus können die Sperrgasströme für den jeweiligen Betriebszustand optimiert werden. Die von den einzelnen Drucksensoren 45a und 45b erfassten Sperrgasraumdrücke p_{SGR1} und p_{SGR2} werden in den Sperrgas-Puffervolumen 43 bzw. 44 gemessen.

Falls eine Flüssigkeit in den Sperrgasräumen ausfallen sollte, kann dies mit dem Füllstandssensor 57 erkannt und das Kondensat durch das Ableitventil 56 abgeleitet werden.

Nachfolgend sind einige verfahrenstechnische Aspekte der Erfindung, insbesondere im Hinblick auf die Steuerung, beschrieben.

Die Drucksensoren 25, 45a, 45b, das regelbare Sperrluft-Zufuhrventil 51, dass Abblaseventil 47 und die Ölpumpe 36 sind, neben weiteren Sensoren wie den Luftdrucksensoren 77, 78 und dem Füllstandssensor 35 sowie dem Flüssigkeitszensor 57 mit der Steuereinheit 60 verbunden, wobei weitere Eingänge zur Erfassung von Messdaten weiterer Sensoren und Ausgänge zur Ansteuerung weiterer Komponenten, insbesondere Ventile, vorgesehen sein können. Die Steuereinheit 60 ist insbesondere dazu ausgebildet, den vom Sensor 25 erfassten Ölraumdruck p_{OR} zu überwachen und aufgrund der von den Sensoren 45 bzw. 45a und 45b erfassten Sperrgasraumdrücken p_{SGR} bzw. p_{SGR1} und p_{SGR2} einen Differenzdruck zum Ölraumdruck p_{OR} zu berechnen. Auf Grundlage dieses Differenzdrucks (p_{SGR} - p_{OR}) steuert die Steuereinheit 60 das Sperrgas-Zufuhrventil 51 bzw. die Sperrgas-Zufuhrventile 51a, 51b. Die Steuereinheit 60 kann (lokal) am Verdichter 1 angeordnet sein oder über eine (drahtlose) Netzwerkverbindung mit dem Verdichter 1 zu dessen Steuerung und Regelung verbunden sein. Der Sperrgasraumdruck p_{SGR} kann innerhalb kann innerhalb fester oder dynamischer Grenzwerte überwacht werden. Die Steuereinheit 60 kann weitere Betriebsparameter des Verdichters, z.B. Ansaug- und Enddrücke, Drehzahlen oder Temperaturen der Verdichterstufen berücksichtigen, um den/die Sperrgasraumdruck bzw. -drücke für den jeweiligen Betriebszustand einzustellen.

Bei längerem Stillstand ist das Sperrgas-Zufuhrventil 51 geschlossen, damit es keine unnötigen Druckluftverluste gibt.

Kurz vor oder mit dem Starten des Antriebes des Verdichters 1 wird das Sperrgas-Zufuhrventil 51 bereits geöffnet, um die Sperrgasräume 13a, 13b mit ausreichendem Überdruck zu beaufschlagen.

Im Betrieb wird der Sperrgasraumdruck p_{SGR} so geregelt, dass p_{SGR} im Sperrgasraum 13a, 13b immer höher ist, als der Ölraumdruck p_{OR} im Ölraum 19a, 19b.

Beim Abfahren wird der Druck p_{SGR} im Sperrgasraum 13a, 13b langsam reduziert, indem bei Bedarf nur noch wenig Sperrgas über die Sperrgas-Zufuhrleitung 50 nachgespeist wird. Dadurch wird ein gleichmäßiger Druckabbau sowohl in den Sperrgas-Puffervolumina 43, 44 mit den Sperrgasräumen 13a, 13b, aber auch im Getriebegehäuse 89 mit den Ölräumen 19a, 19b erreicht. Dies bewirkt, dass das Druckgefälle von den Sperrgasräumen 13a, 13b weiterhin zum hin Ölraum 19a, 19b verläuft und sich nicht umgekehrt. Ein Sperrgasstrom strömt weiter in den in den Ölraum 19a, 19b ein.

Die Erfindung wird auch durch folgende bevorzugte Aspekte noch näher charakterisiert:
1. Trockenverdichtender Verdichter (1) zur Erzeugung eines verdichteten Gases, insbesondere zur Erzeugung von Druckluft, mit einer oder mehreren Verdichterstufen (2, 3), umfassend
   - ein Verdichtergehäuse (4),
   - mindestens einen Verdichterrotor (6, 7, 8), der über eine Rotorlagerung (16) drehbar bezüglich des Verdichtergehäuses (4) gelagert ist,
      wobei das Verdichtergehäuse (4)
      ∘ einen Verdichtungsraum (5) zur Verdichtung von angesaugtem Gas durch den Verdichterrotor (6, 7, 8) und
      ∘ mindestens einen Ölraum (19a, 19b), in dem mindestens ein ölgeschmiertes Lager (18a, 18b) der Rotorlagerung (16) zur Lagerung eines Wellenabschnitts (11a, 11b) des Verdichterrotors (6, 7, 8) aufgenommen ist, aufweist,
   - eine dem Wellenabschnitt (11a, 11b) zugeordnete Wellendichtungsanordnung (10a, 10b), die zwischen dem ölgeschmierten Lager (18a, 18b) und dem Verdichtungsraum (5) zur Abdichtung des Verdichtungsraums (5) gegen Öleintritt aus dem Ölraum (19a, 19b) angeordnet ist,
      wobei die Wellendichtungsanordnung (10a, 10b) eine dem ölgeschmierten Lager (18a, 18b) zugewandte, insbesondere berührungslose, äußere Dichtung (17a, 17b) und eine dem Verdichtungsraum (5) zugewandte, insbesondere berührungslose, innere Dichtung (12a, 12b) aufweist,
      wobei zwischen der äußeren Dichtung (17a, 17b) und der inneren Dichtung (12a, 12b) mindestens ein Sperrgasraum (13a, 13b, 13c, 13d) zur Aufnahme von Sperrgas ausgebildet ist,

   wobei der Ölraum (19a, 19b) mindestens einen Gaszufluss für einen Sperrgasstrom aus dem Sperrgasraum (13a, 13b, 13c, 13d) und
   einen Gasabfluss (26) zur Verbindung mit einem Ölabscheider (30, 31, 32, 33), insbesondere Ölnebelabscheider, aufweist, und
   wobei der Ölraum (19a, 19b) dazu ausgebildet ist, einen Ölraumdruck p_{OR} bereitzustellen, der den Umgebungsdruck p₀ des Verdichtergehäuses (4) um eine Ölabscheidedruckdifferenz Δp übersteigt, die vorzugsweise mindestens 20 mbar beträgt.
2. Trockenverdichtender Verdichter (1) nach Aspekt 1,
   **dadurch gekennzeichnet**, dass der Gasabfluss (26) des Ölraums (19a, 19b) mit mindestens einem Ölabscheider (30, 31, 32, 33), insbesondere einem Ölnebelabscheider, verbunden ist.
3. Trockenverdichtender Verdichter (1) zur Erzeugung eines verdichteten Gases, insbesondere zur Erzeugung von Druckluft, mit einer oder mehreren Verdichterstufen (2, 3), umfassend
   - ein Verdichtergehäuse (4),
   - mindestens einen Verdichterrotor (6, 7, 8), der über eine Rotorlagerung (16) drehbar bezüglich des Verdichtergehäuses (4) gelagert ist,
      wobei das Verdichtergehäuse (4)
      ∘ einen Verdichtungsraum (5) zur Verdichtung von angesaugtem Gas durch den Verdichterrotor (6, 7, 8) und
      ∘ mindestens einen Ölraum (19a, 19b), in dem mindestens ein ölgeschmiertes Lager (18a, 18b) der Rotorlagerung (16) zur Lagerung eines Wellenabschnitts (11a, 11b) des Verdichterrotors (6, 7, 8) aufgenommen ist, aufweist,
   - eine dem Wellenabschnitt (11a, 11b) zugeordnete Wellendichtungsanordnung (10a, 10b), die zwischen dem ölgeschmierten Lager (18a, 18b) und dem Verdichtungsraum (5) zur Abdichtung des Verdichtungsraums (5) gegen Öleintritt aus dem Ölraum (19a, 19b) angeordnet ist, und eine, insbesondere berührungslose, Dichtung (17a, 17b) aufweist,

   wobei der Ölraum (19a, 19b) mindestens einen Gaszufluss für einen Leckagegasstrom aus der Wellendichtungsanordnung (10a, 10b) und einen Gasabfluss (26) aufweist, der mit mindestens einem Ölabscheider (30, 31, 32, 33), insbesondere Ölnebelabscheider, verbunden ist,
   wobei der Ölraum (19a, 19b) dazu ausgebildet ist, einen Ölraumdruck p_{OR} bereitzustellen, der den Umgebungsdruck p₀ des Verdichtergehäuses (4) um eine Ölabscheidedruckdifferenz Δp übersteigt, die vorzugsweise mindestens 20 mbar beträgt.
4. Trockenverdichtender Verdichter (1) nach Aspekt 3,
   **dadurch gekennzeichnet**, dass die Dichtung (17a, 17b) eine dem ölgeschmierten Lager (18a, 18b) zugewandte, insbesondere berührungslose, äußere Dichtung (17a, 17b) ist und die Wellendichtungsanordnung (10a, 10b) außerdem eine dem Verdichtungsraum (5) zugewandte, insbesondere berührungslose, innere Dichtung (12a, 12b) aufweist, wobei zwischen der äußeren Dichtung (17a, 17b) und der inneren Dichtung (12a, 12b) mindestens ein Sperrgasraum (13a, 13b, 13c, 13d) zur Aufnahme von Sperrgas ausgebildet ist, wobei der Leckagegasstrom aus der Wellendichtungsanordnung (10a, 10b) insbesondere ein Sperrgasstrom aus dem Sperrgasraum (13a, 13b, 13c, 13d) ist.
5. Trockenverdichtender Verdichter (1) nach einem der Aspekte 1 bis 4, **dadurch gekennzeichnet,** dass der Gaszufluss des Ölraums (19a, 19b) durch mindestens einen Dichtspalt (14a, 14b) der, insbesondere äußeren, Dichtung (17a, 17b) gebildet ist.
6. Trockenverdichtender Verdichter (1) nach einem der vorherigen Aspekte, **dadurch gekennzeichnet**, dass der Verdichter (1) mindestens einen Drucksensor (25) zum Erfassen des Ölraumdrucks p_{OR} umfasst.
7. Trockenverdichtender Verdichter (1) nach einem der vorherigen Aspekte, **dadurch gekennzeichnet**, dass der Ölabscheider (30, 31, 32, 33), insbesondere Ölnebelabscheider, mehrere Abscheidungsstufen umfasst, insbesondere mindestens einen Vorabscheider (31) und/oder mindestens einen Feinabscheider (32) und/oder mindestens einen Restölabscheider (33), wobei der Feinabscheider (32) vorzugsweise einen Koaleszenzfilter umfasst, wobei weiter vorzugsweise mehrere Koaleszenzfilter in Reihe geschaltet sind, wobei vorzugsweise der Restölabscheider (33) einen Adsorptionsfilter umfasst.
8. Trockenverdichtender Verdichter (1) nach einem der vorherigen Aspekte, **dadurch gekennzeichnet**, dass der Sperrgasstrom und/oder der Leckagegasstrom ein Luftstrom ist, wobei stromabwärts des Ölabscheiders (30, 31, 32, 33) ein Luftauslass (37) in die freie Umgebung des Verdichters (1) führt.
9. Trockenverdichtender Verdichter (1) nach einem der vorherigen Aspekte, **dadurch gekennzeichnet**, dass der Verdichter (1) eine Ölrückführleitung (34) für im Ölabscheider (30, 31, 32) abgeschiedenes Öl in den Ölraum (19a, 19b) umfasst, wobei in der Ölrückführleitung (34) vorzugsweise eine Ölpumpe (36) angeordnet ist.
10. Trockenverdichtender Verdichter (1) nach einem der vorherigen Aspekte, **dadurch gekennzeichnet,** dass der Verdichter (1) ein, vorzugsweise steuerbares, Abblaseventil (47) zum Ablassen des Ölraumdrucks p_{OR} aus dem Ölraum (19a, 19b) umfasst.
11. Trockenverdichtender Verdichter (1) nach einem der vorherigen Aspekte, **dadurch gekennzeichnet**, dass die Rotorlagerung (16) ein ölgeschmiertes saugseitiges Lager (18a) und ein ölgeschmiertes druckseitiges Lager (18b) umfasst, die jeweils einen Wellenabschnitt (11a, 11b) des Verdichterrotors (6, 7, 8) drehbar bezüglich des Verdichtergehäuses (4) lagern, wobei das Verdichtergehäuse (4) einen saugseitigen Ölraum (19a), in dem das saugseitige Lager (18a) aufgenommen ist, und einen druckseitigen Ölraum (19b), in dem das druckseitige Lager (18b) aufgenommen ist, aufweist, wobei der saugseitige Ölraum (18a) und der druckseitige Ölraum (18b), insbesondere über eine Verbindungsleitung (21), miteinander verbunden sind.
12. Trockenverdichtender Verdichter (1) nach einem der vorherigen Aspekte, insbesondere nach einem der Aspekte 1, 2 oder 4 bis 11,
   **dadurch gekennzeichnet**, dass die Rotorlagerung (16) ein ölgeschmiertes saugseitiges Lager (18a) und ein ölgeschmiertes druckseitiges Lager (18b) umfasst, die jeweils einen Wellenabschnitt (11a, 11b) des Verdichterrotors (6, 7, 8) drehbar bezüglich des Verdichtergehäuses (4) lagern, wobei für das saugseitige Lager (18a) eine saugseitige Wellendichtungsanordnung (10a) und für das druckseitige Lager (18b) eine druckseitige Wellendichtungsanordnung (10b) vorgesehen ist,
   wobei der saugseitige Sperrgasraum (13a, 13c) der saugseitigen Wellendichtungsanordnung (10a) und der druckseitige Sperrgasraum (13b, 13d) der druckseitigen Wellendichtungsanordnung (10b) über eine Sperrgas-Verbindungsleitung (42) miteinander verbunden sind.
13. Trockenverdichtender Verdichter (1) nach einem der vorherigen Aspekte, insbesondere nach einem der Aspekte 1, 2 oder 4 bis 12,
   **dadurch gekennzeichnet**, dass die Wellendichtungsanordnung (10a, 10b) zusätzlich eine, insbesondere berührungslose, mittlere Dichtung (15a, 15b) zwischen der äußeren Dichtung (17a, 17b) und der inneren Dichtung (12a, 12b) aufweist, wobei zwischen der äußeren Dichtung (17a, 17b) und der mittleren Dichtung (15a, 15b) ein äußerer Sperrgasraum (13a, 13b) zur Aufnahme von Sperrgas und zwischen der mittleren Dichtung (15a, 15b) und der inneren Dichtung (12a, 12b) ein innerer Sperrgasraum (13c, 13d) zur Aufnahme von Sperrgas ausgebildet ist.
14. Trockenverdichtender Verdichter (1) nach einem der vorherigen Aspekte, insbesondere nach einem der Aspekte 1, 2 oder 4 bis 13,
   **dadurch gekennzeichnet**, dass der Verdichter (1) eine Sperrgaszuführung (50, 51, 51a, 51b) aufweist, durch die der Sperrgasraumdruck p_{SGR} in mindestens einem Sperrgasraum (13a, 13b, 13c, 13d) variabel einstellbar, vorzugsweise regelbar, ist, wobei die Sperrgaszuführung (50, 51, 51a, 51b, 55, 58) insbesondere ein, vorzugsweise regelbares, Sperrgas-Zufuhrventil (51) umfasst.
15. Trockenverdichtender Verdichter (1) nach einem der vorherigen Aspekte, insbesondere nach einem der Aspekte 1, 2 oder 4 bis 14,
   **dadurch gekennzeichnet**, dass der Verdichter (1) zwischen einer Sperrgaseinspeisung (58) und einem Sperrgasraum (13a, 13b, 13c, 13d) mindestens ein Sperrgas-Puffervolumen (48, 55) aufweist, das vorzugsweise als Hohlraum im Verdichtergehäuse (4) ausgebildet ist.
16. Trockenverdichtender Verdichter (1) nach einem der vorherigen Aspekte, insbesondere nach einem der Aspekte 1, 2 oder 4 bis 15,
   **dadurch gekennzeichnet**, dass der Verdichter (1) mindestens einen Drucksensor (45, 45a, 45b) zum Erfassen eines Sperrgasraumdrucks p_{SGR}, insbesondere in mindestens einem Sperrgasraum (13a, 13b, 13c, 13d) und/oder in einem Sperrgas-Puffervolumen (48, 55), umfasst.
17. Trockenverdichtender Verdichter (1) nach einem der vorherigen Aspekte, insbesondere nach einem der Aspekte 1, 2 oder 4 bis 16,
   **dadurch gekennzeichnet**, dass eine, vorzugsweise elektronische, Steuereinheit (60) vorgesehen ist, die zum Überwachen des Sperrgasraumdrucks p_{SGR} und/oder des Ölraumdrucks p_{OR} und/oder des Differenzdrucks zwischen dem Sperrgasraumdruck p_{SGR} und dem Ölraumdruck p_{OR} ausgebildet ist.
18. Trockenverdichtender Verdichter (1) nach einem der vorherigen Aspekte, insbesondere nach einem der Aspekte 1, 2 oder 4 bis 17,
   **dadurch gekennzeichnet**, dass eine, vorzugsweise elektronische, Steuereinheit (60) dazu ausgebildet ist, insbesondere für verschiedene Betriebszustände des Verdichters (1), den Sperrgasraumdruck p_{SGR} im Sperrgasraum (13a, 13b, 13c, 13d) so einzustellen, dass der Sperrgasraumdruck p_{SGR} höher ist als der Ölraumdruck p_{OR} im Ölraum (19a, 19b), vorzugsweise durch Regeln eines Sperrgas-Zufuhrventils (51), das insbesondere in einer Sperrgas-Zufuhrleitung (50) zu dem mindestens einen Sperrgasraum (13a, 13b, 13c, 13d) angeordnet ist.
19. Trockenverdichtender Verdichter (1) nach einem der vorherigen Aspekte, insbesondere nach einem der Aspekte 1, 2 oder 4 bis 17,
   **dadurch gekennzeichnet**, dass der Verdichter (1) ein als Druckminderungsventil ausgeführtes Sperrgas-Zufuhrventil (51) aufweist, das insbesondere in einer Sperrgas-Zufuhrleitung (50) zu dem mindestens einen Sperrgasraum (13a, 13b, 13c, 13d) angeordnet ist.
20. Trockenverdichtender Verdichter (1) nach einem der vorherigen Aspekte, insbesondere nach einem der Aspekte 1, 2 oder 4 bis 19,
   **dadurch gekennzeichnet**, dass mindestens ein Sperrgasraum (13a, 13b, 13c, 13d) eine Unterdrucksicherung (46) aufweist, die vorzugsweise als ein zum Sperrgasraum (13a, 13b, 13c, 13d) hin öffnendes Rückschlagventil ausgeführt ist.
21. Trockenverdichtender Verdichter (1) nach einem der vorherigen Aspekte, **dadurch gekennzeichnet**, dass Ölräume (19a, 19b) mehrerer Verdichterstufen (2, 3), insbesondere ein Ölraum einer ersten Verdichterstufe (2) und ein Ölraum einer zweiten Verdichterstufe (3), vorzugsweise über ein gemeinsames Getriebegehäuse (89) und/oder über Verbindungsleitungen, miteinander verbunden sind.
22. Trockenverdichtender Verdichter (1) nach einem der vorherigen Aspekte, insbesondere nach einem der Aspekte 1, 2 oder 4 bis 21,
   **dadurch gekennzeichnet**, dass der Verdichter (1) mehrere Verdichterstufen (2, 3) aufweist, wobei mindestens ein Sperrgasraum (13a, 13b, 13c, 13d) einer, vorzugsweise auf einem niedrigeren ersten Druckniveau arbeitenden, ersten Verdichterstufe (2) mit mindestens einem Sperrgasraum (13a, 13b, 13c, 13d) einer, vorzugsweise auf einem höheren zweiten Druckniveau arbeitenden, zweiten Verdichterstufe (3), vorzugsweise über eine Sperrgas-Verbindungsleitung (42), verbunden ist, insbesondere derart, dass ein, vorzugsweise aus der druckseitigen Wellendichtungsanordnung (10b) der zweiten Verdichterstufe (3) abließender, Leckagegasstrom der zweiten Verdichterstufe (3) zu mindestens einem Sperrgasraum (13a, 13b, 13c, 13d) der ersten Verdichterstufe (2) strömen kann.
23. Verfahren zur Ölabscheidung für einen trockenverdichtenden Verdichter (1) mit einer oder mehreren Verdichterstufen (2, 3) zur Erzeugung eines verdichteten Gases, insbesondere zur Erzeugung von Druckluft, insbesondere für einen trockenverdichtenden Verdichter (1) nach einem der Aspekte 1 bis 22, mit einer ölgeschmierten Rotorlagerung (16) mindestens eines Verdichterrotors (6, 7, 8) des Verdichters (1), wobei das Verfahren folgende Schritte aufweist:
   - Einleiten eines Leckagegasstroms, insbesondere eines Sperrgasstroms, der aus einer einem Wellenabschnitt (11a, 11b) des Verdichterrotors (6, 7, 8) zugeordneten Wellendichtungsanordnung (10a, 10b) abfließt, in einen Ölraum (19a, 19b) eines Verdichtergehäuses (4) des Verdichters (1), in dem mindestens ein ölgeschmiertes Lager (18a, 18b) der Rotorlagerung (16) aufgenommen ist,
   - Bereitstellen eines Ölraumdrucks p_{OR} im Ölraum (19a, 19b), der den Umgebungsdruck p₀ des Verdichtergehäuses (4) um eine Ölabscheidedruckdifferenz Δp übersteigt, die vorzugsweise mindestens 20 mbar beträgt.
   - Zuführen eines Gasstroms vom Ölraum (19a, 19b) zu einem Ölabscheider (30, 31, 32, 33).
24. Verfahren nach Aspekt 23,
   **gekennzeichnet** durch mindestens einen der folgenden Schritte:
   - Erfassen des Ölraumdrucks p_{OR} durch mindestens einen Drucksensor (25); und/oder
   - Erfassen eines Sperrgasraumdrucks p_{SGR}, insbesondere in mindestens einem Sperrgasraum (13a, 13b, 13c, 13d) der Wellendichtungsanordnung (10a, 10b) und/oder in einem Sperrgas-Puffervolumen (48, 55) einer Sperrgaszuführung (50, 51, 51a, 51b), durch mindestens einen Drucksensor (45, 45a, 45b); und/oder
   - Bestimmen des Differenzdrucks zwischen dem Sperrgasraumdruck p_{SGR}, insbesondere des Sperrgasraumdrucks p_{SGR} in mindestens einem Sperrgasraum (13a, 13b, 13c, 13d) der Wellendichtungsanordnung (10a, 10b) und/oder in einem Sperrgas-Puffervolumen (48, 55) einer Sperrgaszuführung (50, 51, 51a, 51b), und dem Ölraumdruck p_{OR},
      wobei die Wellendichtungsanordnung (10a, 10b) insbesondere eine dem ölgeschmierten Lager (18a, 18b) zugewandte, insbesondere berührungslose, äußere Dichtung (17a, 17b) und eine dem Verdichtungsraum (5) zugewandte, insbesondere berührungslose, innere Dichtung (12a, 12b) aufweist und der Sperrgasraum (13a, 13b, 13c, 13d) insbesondere zwischen der äußeren Dichtung (17a, 17b) und der inneren Dichtung (12a, 12b) zur Aufnahme von Sperrgas ausgebildet ist; und/oder
   - Überwachen des Sperrgasraumdrucks p_{SGR} und/oder des Ölraumdrucks p_{OR} und/oder des Differenzdrucks zwischen dem Sperrgasruck p_{SGR} und dem Ölraumdruck p_{OR} durch eine Steuereinheit (60).
25. Verfahren nach Aspekt 23 oder 24,
   **gekennzeichnet** durch Einstellen, insbesondere variables Einstellen, vorzugsweise Regeln, eines Sperrgasraumdrucks p_{SGR} in mindestens einem Sperrgasraum (13a, 13b, 13c, 13d) der Wellendichtungsanordnung (10a, 10b) durch Zuführen von Sperrgas in den Sperrgasraum (13a, 13b, 13c, 13d), insbesondere in Abhängigkeit eines Betriebszustands des Verdichters (1), so dass der Sperrgasraumdruck p_{SGR} höher ist als der Ölraumdruck p_{OR} im Ölraum (19a, 19b).
26. Verfahren nach einem der Aspekte 23 bis 25,
   **gekennzeichnet** durch Zuführen von Sperrgas in den Sperrgasraum (13a, 13b, 13c, 13d), insbesondere durch Öffnen eines Sperrgas-Zufuhrventils (51, 51a, 51b) einer Sperrgaszuführung (50, 51, 51a, 51b), so dass der Sperrgasraumdruck p_{SGR} im Sperrgasraum (13a, 13b, 13c, 13d) höher ist als der Ölraumdruck p_{OR} im Ölraum (19a, 19b),
   - während der Verdichter (1) im Leerlauf betrieben wird und/oder
   - während instationärer Betriebszustände des Verdichters (1), vorzugsweise während eines Anfahrzustands oder eines Ausschaltzustands des Verdichters (1), und/oder
   - während der Verdichter (1) im Lastlauf betrieben wird, insbesondere wenn der Verdichter (1) ein einstufiger Verdichter ist.
27. Verfahren nach einem der Aspekte 23 bis 26,
   **gekennzeichnet** durch Zuführen eines Leckagegasstroms aus mindestens einem Sperrgasraum (13a, 13b, 13c, 13d) einer, vorzugsweise auf einem höheren zweiten Druckniveau arbeitenden, zweiten Verdichterstufe (3) in mindestens einen Sperrgasraum (13a, 13b, 13c, 13d) einer, vorzugsweise auf einem niedrigeren ersten Druckniveau arbeitenden, ersten Verdichterstufe (2), vorzugsweise über eine die Sperrgasräume (13a, 13b, 13c, 13d) verbindende Sperrgas-Verbindungsleitung (42), wobei der Leckagegasstrom vorzugsweise aus einer druckseitigen Wellendichtungsanordnung (10b) der zweiten Verdichterstufe (3) in einen druckseitigen Sperrgasraum (13b, 13d) der zweiten Verdichterstufe (3) abfließt.

### Bezugszeichenliste:

- 1: Verdichter
- 2: erste Verdichterstufe
- 3: Zweiter Verdichterstufe
- 4: Verdichtergehäuse
- 5: Verdichtungsraum
- 6: Verdichterrotor
- 7: erster Verdichterrotor
- 8: zweiter Verdichterrotor
- 9: Umgebung
- 10a, 10b: Wellendichtungsanordnung
- 11a, 11b: Wellenabschnitt
- 12a, 12b: innere Dichtung
- 13a, 13b: äußerer Sperrgasraum
- 13c, 13d: innerer Sperrgasraum
- 14a, 14b: Dichtspalt
- 15a, 15b: mittlere Dichtung
- 16: Rotorlagerung
- 17a, 17b: äußere Dichtung
- 18a, 18b: Lager
- 19a, 19b: Ölraum
- 20: Gasabflussleitung
- 21: Verbindungsleitung
- 23: Ölspiegel
- 24: Ölsumpf
- 25: Drucksensor (Ölraumdruck p_{OR})
- 26: Gasabfluss
- 30: Ölabscheider
- 31: Vorabscheider
- 32: Feinabscheider
- 33: Restölabscheider
- 34: Ölrückführleitung
- 35: Füllstandssensor
- 36: Ölpumpe
- 37: Luftauslass
- 38: Rückströmsicherung
- 39: Rückschlagventil
- 41: Sperrgaszufuhrkanal
- 42: Sperrgas-Verbindungsleitung
- 43, 44: Sperrgas-Puffervolumen
- 45: Drucksensor (Sperrgasraumdruck p_{SGR})
- 45a, 45b: Drucksensor (Sperrgasraumdruck p_{SGR})
- 46: Unterdrucksicherung
- 47: Abblaseventil
- 48: Sperrgas-Puffervolumen
- 50: Sperrgas-Zufuhrleitung
- 51: Sperrgas-Zufuhrventil
- 51a: Sperrgas-Zufuhrventil
- 51b: Sperrgas-Zufuhrventil
- 52: Druckregelventil
- 53: Druckregelventil
- 54: Drucksensor
- 55: Sperrgas-Puffervolumen
- 56: Ableitventil
- 57: Flüssigkeitssensor
- 58: Sperrgaseinspeisung
- 59: Rückschlagventil
- 60: Steuereinheit
- 70: Lufteinlass
- 71: Einlassventil
- 72: Entlastungsventil
- 73: Rückschlagventil
- 74: Wärmetauscher (Druckluftkühler)
- 75: Kondensatabscheider
- 76: Druckluftauslass
- 77: Luftdrucksensor für Anlagenenddruck
- 78: Luftdrucksensor für Verdichtungsenddruck
- 80: Schmierölleitung
- 81: Schmierölpumpe
- 82: Schmieröleintritt
- 83: Antriebsgetriebe
- 84: Synchrongetriebe
- 85: Saugseite
- 86: Druckseite
- 87: Antriebswellendichtung
- 88: Leckagesammeleinrichtung
- 89: Getriebegehäuse
- 90: Antriebswelle

## Patentansprüche

1. Trockenverdichtender Verdichter (1) zur Erzeugung eines verdichteten Gases, insbesondere zur Erzeugung von Druckluft, mit einer oder mehreren Verdichterstufen (2, 3), umfassend
- ein Verdichtergehäuse (4),
- mindestens einen Verdichterrotor (6, 7, 8), der über eine Rotorlagerung (16) drehbar bezüglich des Verdichtergehäuses (4) gelagert ist,
wobei das Verdichtergehäuse (4)
∘ einen Verdichtungsraum (5) zur Verdichtung von angesaugtem Gas durch den Verdichterrotor (6, 7, 8) und
∘ mindestens einen Ölraum (19a, 19b), in dem mindestens ein ölgeschmiertes Lager (18a, 18b) der Rotorlagerung (16) zur Lagerung eines Wellenabschnitts (11a, 11b) des Verdichterrotors (6, 7, 8) aufgenommen ist, aufweist,
- eine dem Wellenabschnitt (11a, 11b) zugeordnete Wellendichtungsanordnung (10a, 10b), die zwischen dem ölgeschmierten Lager (18a, 18b) und dem Verdichtungsraum (5) zur Abdichtung des Verdichtungsraums (5) gegen Öleintritt aus dem Ölraum (19a, 19b) angeordnet ist, und eine, insbesondere berührungslose, Dichtung (17a, 17b) aufweist,
wobei der Ölraum (19a, 19b) mindestens einen Gaszufluss für einen Leckagegasstrom aus der Wellendichtungsanordnung (10a, 10b) und
einen Gasabfluss (26) aufweist, der mit mindestens einem Ölabscheider (30, 31, 32, 33), insbesondere Ölnebelabscheider, verbunden ist,
wobei der Ölraum (19a, 19b) dazu ausgebildet ist, einen Ölraumdruck p_{OR} bereitzustellen, der den Umgebungsdruck p₀ des Verdichtergehäuses (4) um eine Ölabscheidedruckdifferenz Δp übersteigt, die vorzugsweise mindestens 20 mbar beträgt.

2. Trockenverdichtender Verdichter (1) nach Anspruch 1,
**dadurch gekennzeichnet, dass** der dem Ölraum (19a, 19b) zufließende Leckagestrom aus dem Verdichtungsraum ausgeströmtes, verdichtetes oder zu verdichtendes Gas, das insbesondere aufgrund einer Leckage der Wellendichtungsanordnung in den Ölraum einströmt, beinhaltet.

3. Trockenverdichtender Verdichter (1) nach Anspruch 1 oder 2,
**dadurch gekennzeichnet, dass** der Druck, der an einem Gasauslass stromabwärts eines Ölabscheiders herrscht, dem Umgebungsdruck p₀ des Verdichtergehäuses (4) entspricht, oder alternativ auch dem Ansaugdruck des Verdichters bei Verdichtung eines Prozessgases und Rückführung des gereinigten Prozessgasstroms in den Ansaugbereich des Verdichters.

4. Trockenverdichtender Verdichter (1) nach Anspruch 3,
**dadurch gekennzeichnet, dass** die Dichtung (17a, 17b) eine dem ölgeschmierten Lager (18a, 18b) zugewandte, insbesondere berührungslose, äußere Dichtung (17a, 17b) ist und die Wellendichtungsanordnung (10a, 10b) außerdem eine dem Verdichtungsraum (5) zugewandte, insbesondere berührungslose, innere Dichtung (12a, 12b) aufweist, wobei zwischen der äußeren Dichtung (17a, 17b) und der inneren Dichtung (12a, 12b) mindestens ein Sperrgasraum (13a, 13b, 13c, 13d) zur Aufnahme von Sperrgas ausgebildet ist, wobei der Leckagegasstrom aus der Wellendichtungsanordnung (10a, 10b) insbesondere ein Sperrgasstrom aus dem Sperrgasraum (13a, 13b, 13c, 13d) ist.

5. Trockenverdichtender Verdichter (1) nach einem der Ansprüche 1 bis 4,
**dadurch gekennzeichnet, dass** der Gaszufluss des Ölraums (19a, 19b) durch mindestens einen Dichtspalt (14a, 14b) der, insbesondere äußeren, Dichtung (17a, 17b) gebildet ist.

6. Trockenverdichtender Verdichter (1) nach einem der vorherigen Ansprüche, **dadurch gekennzeichnet, dass** der Verdichter (1) mindestens einen Drucksensor (25) zum Erfassen des Ölraumdrucks p_{OR} umfasst.

7. Trockenverdichtender Verdichter (1) nach einem der vorherigen Ansprüche, **dadurch gekennzeichnet, dass** der Ölabscheider (30, 31, 32, 33), insbesondere Ölnebelabscheider, mehrere Abscheidungsstufen umfasst, insbesondere mindestens einen Vorabscheider (31) und/oder mindestens einen Feinabscheider (32) und/oder mindestens einen Restölabscheider (33), wobei der Feinabscheider (32) vorzugsweise einen Koaleszenzfilter umfasst, wobei weiter vorzugsweise mehrere Koaleszenzfilter in Reihe geschaltet sind, wobei vorzugsweise der Restölabscheider (33) einen Adsorptionsfilter umfasst.

8. Trockenverdichtender Verdichter (1) nach einem der vorherigen Ansprüche, **dadurch gekennzeichnet, dass** der Sperrgasstrom und/oder der Leckagegasstrom ein Luftstrom ist, wobei stromabwärts des Ölabscheiders (30, 31, 32, 33) ein Luftauslass (37) in die freie Umgebung des Verdichters (1) führt.

9. Trockenverdichtender Verdichter (1) nach einem der vorherigen Ansprüche, **dadurch gekennzeichnet, dass** der Verdichter (1) eine Ölrückführleitung (34) für im Ölabscheider (30, 31, 32) abgeschiedenes Öl in den Ölraum (19a, 19b) umfasst, wobei in der Ölrückführleitung (34) vorzugsweise eine Ölpumpe (36) angeordnet ist.

10. Trockenverdichtender Verdichter (1) nach einem der vorherigen Ansprüche, **dadurch gekennzeichnet, dass** der Verdichter (1) ein, vorzugsweise steuerbares, Abblaseventil (47) zum Ablassen des Ölraumdrucks p_{OR} aus dem Ölraum (19a, 19b) umfasst.

11. Trockenverdichtender Verdichter (1) nach einem der vorherigen Ansprüche, **dadurch gekennzeichnet, dass** die Rotorlagerung (16) ein ölgeschmiertes saugseitiges Lager (18a) und ein ölgeschmiertes druckseitiges Lager (18b) umfasst, die jeweils einen Wellenabschnitt (11a, 11b) des Verdichterrotors (6, 7, 8) drehbar bezüglich des Verdichtergehäuses (4) lagern, wobei das Verdichtergehäuse (4) einen saugseitigen Ölraum (19a), in dem das saugseitige Lager (18a) aufgenommen ist, und einen druckseitigen Ölraum (19b), in dem das druckseitige Lager (18b) aufgenommen ist, aufweist, wobei der saugseitige Ölraum (18a) und der druckseitige Ölraum (18b), insbesondere über eine Verbindungsleitung (21), miteinander verbunden sind.

12. Trockenverdichtender Verdichter (1) nach einem der vorherigen Ansprüche, insbesondere nach einem der Ansprüche 1, 2 oder 4 bis 11,
**dadurch gekennzeichnet, dass** die Rotorlagerung (16) ein ölgeschmiertes saugseitiges Lager (18a) und ein ölgeschmiertes druckseitiges Lager (18b) umfasst, die jeweils einen Wellenabschnitt (11a, 11b) des Verdichterrotors (6, 7, 8) drehbar bezüglich des Verdichtergehäuses (4) lagern, wobei für das saugseitige Lager (18a) eine saugseitige Wellendichtungsanordnung (10a) und für das druckseitige Lager (18b) eine druckseitige Wellendichtungsanordnung (10b) vorgesehen ist,
wobei der saugseitige Sperrgasraum (13a, 13c) der saugseitigen Wellendichtungsanordnung (10a) und der druckseitige Sperrgasraum (13b, 13d) der druckseitigen Wellendichtungsanordnung (10b) über eine Sperrgas-Verbindungsleitung (42) miteinander verbunden sind.

13. Trockenverdichtender Verdichter (1) nach einem der vorherigen Ansprüche, insbesondere nach einem der Ansprüche 1, 2 oder 4 bis 12,
**dadurch gekennzeichnet, dass** die Wellendichtungsanordnung (10a, 10b) zusätzlich eine, insbesondere berührungslose, mittlere Dichtung (15a, 15b) zwischen der äußeren Dichtung (17a, 17b) und der inneren Dichtung (12a, 12b) aufweist, wobei zwischen der äußeren Dichtung (17a, 17b) und der mittleren Dichtung (15a, 15b) ein äußerer Sperrgasraum (13a, 13b) zur Aufnahme von Sperrgas und zwischen der mittleren Dichtung (15a, 15b) und der inneren Dichtung (12a, 12b) ein innerer Sperrgasraum (13c, 13d) zur Aufnahme von Sperrgas ausgebildet ist.

14. Trockenverdichtender Verdichter (1) nach einem der vorherigen Ansprüche, insbesondere nach einem der Ansprüche 1, 2 oder 4 bis 13,
**dadurch gekennzeichnet, dass** der Verdichter (1) eine Sperrgaszuführung (50, 51, 51a, 51b) aufweist, durch die der Sperrgasraumdruck p_{SGR} in mindestens einem Sperrgasraum (13a, 13b, 13c, 13d) variabel einstellbar, vorzugsweise regelbar, ist, wobei die Sperrgaszuführung (50, 51, 51a, 51b, 55, 58) insbesondere ein, vorzugsweise regelbares, Sperrgas-Zufuhrventil (51) umfasst.

15. Trockenverdichtender Verdichter (1) nach einem der vorherigen Ansprüche, insbesondere nach einem der Ansprüche 1, 2 oder 4 bis 14,
**dadurch gekennzeichnet, dass** der Verdichter (1) zwischen einer Sperrgaseinspeisung (58) und einem Sperrgasraum (13a, 13b, 13c, 13d) mindestens ein Sperrgas-Puffervolumen (48, 55) aufweist, das vorzugsweise als Hohlraum im Verdichtergehäuse (4) ausgebildet ist.

16. Trockenverdichtender Verdichter (1) nach einem der vorherigen Ansprüche, insbesondere nach einem der Ansprüche 1, 2 oder 4 bis 15,
**dadurch gekennzeichnet, dass** der Verdichter (1) mindestens einen Drucksensor (45, 45a, 45b) zum Erfassen eines Sperrgasraumdrucks p_{SGR}, insbesondere in mindestens einem Sperrgasraum (13a, 13b, 13c, 13d) und/oder in einem Sperrgas-Puffervolumen (48, 55), umfasst.

17. Trockenverdichtender Verdichter (1) nach einem der vorherigen Ansprüche, insbesondere nach einem der Ansprüche 1, 2 oder 4 bis 16,
**dadurch gekennzeichnet, dass** eine, vorzugsweise elektronische, Steuereinheit (60) vorgesehen ist, die zum Überwachen des Sperrgasraumdrucks p_{SGR} und/oder des Ölraumdrucks p_{OR} und/oder des Differenzdrucks zwischen dem Sperrgasraumdruck p_{SGR} und dem Ölraumdruck p_{OR} ausgebildet ist.

18. Trockenverdichtender Verdichter (1) nach einem der vorherigen Ansprüche, insbesondere nach einem der Ansprüche 1, 2 oder 4 bis 17,
**dadurch gekennzeichnet, dass** eine, vorzugsweise elektronische, Steuereinheit (60) dazu ausgebildet ist, insbesondere für verschiedene Betriebszustände des Verdichters (1), den Sperrgasraumdruck p_{SGR} im Sperrgasraum (13a, 13b, 13c, 13d) so einzustellen, dass der Sperrgasraumdruck p_{SGR} höher ist als der Ölraumdruck p_{OR} im Ölraum (19a, 19b), vorzugsweise durch Regeln eines Sperrgas-Zufuhrventils (51), das insbesondere in einer Sperrgas-Zufuhrleitung (50) zu dem mindestens einen Sperrgasraum (13a, 13b, 13c, 13d) angeordnet ist.

19. Trockenverdichtender Verdichter (1) nach einem der vorherigen Ansprüche, insbesondere nach einem der Ansprüche 1, 2 oder 4 bis 17,
**dadurch gekennzeichnet, dass** der Verdichter (1) ein als Druckminderungsventil ausgeführtes Sperrgas-Zufuhrventil (51) aufweist, das insbesondere in einer Sperrgas-Zufuhrleitung (50) zu dem mindestens einen Sperrgasraum (13a, 13b, 13c, 13d) angeordnet ist.

20. Trockenverdichtender Verdichter (1) nach einem der vorherigen Ansprüche, insbesondere nach einem der Ansprüche 1, 2 oder 4 bis 19,
**dadurch gekennzeichnet, dass** mindestens ein Sperrgasraum (13a, 13b, 13c, 13d) eine Unterdrucksicherung (46) aufweist, die vorzugsweise als ein zum Sperrgasraum (13a, 13b, 13c, 13d) hin öffnendes Rückschlagventil ausgeführt ist.

21. Trockenverdichtender Verdichter (1) nach einem der vorherigen Ansprüche, **dadurch gekennzeichne**t, dass Ölräume (19a, 19b) mehrerer Verdichterstufen (2, 3), insbesondere ein Ölraum einer ersten Verdichterstufe (2) und ein Ölraum einer zweiten Verdichterstufe (3), vorzugsweise über ein gemeinsames Getriebegehäuse (89) und/oder über Verbindungsleitungen, miteinander verbunden sind.

22. Trockenverdichtender Verdichter (1) nach einem der vorherigen Ansprüche, insbesondere nach einem der Ansprüche 1, 2 oder 4 bis 21,
**dadurch gekennzeichnet, dass** der Verdichter (1) mehrere Verdichterstufen (2, 3) aufweist, wobei mindestens ein Sperrgasraum (13a, 13b, 13c, 13d) einer, vorzugsweise auf einem niedrigeren ersten Druckniveau arbeitenden, ersten Verdichterstufe (2) mit mindestens einem Sperrgasraum (13a, 13b, 13c, 13d) einer, vorzugsweise auf einem höheren zweiten Druckniveau arbeitenden, zweiten Verdichterstufe (3), vorzugsweise über eine Sperrgas-Verbindungsleitung (42), verbunden ist, insbesondere derart, dass ein, vorzugsweise aus der druckseitigen Wellendichtungsanordnung (10b) der zweiten Verdichterstufe (3) abließender, Leckagegasstrom der zweiten Verdichterstufe (3) zu mindestens einem Sperrgasraum (13a, 13b, 13c, 13d) der ersten Verdichterstufe (2) strömen kann.

23. Verfahren zur Ölabscheidung für einen trockenverdichtenden Verdichter (1) mit einer oder mehreren Verdichterstufen (2, 3) zur Erzeugung eines verdichteten Gases, insbesondere zur Erzeugung von Druckluft, insbesondere für einen trockenverdichtenden Verdichter (1) nach einem der Ansprüche 1 bis 22, mit einer ölgeschmierten Rotorlagerung (16) mindestens eines Verdichterrotors (6, 7, 8) des Verdichters (1), wobei das Verfahren folgende Schritte aufweist:
- Einleiten eines Leckagegasstroms, insbesondere eines Sperrgasstroms, der aus einer einem Wellenabschnitt (11a, 11b) des Verdichterrotors (6, 7, 8) zugeordneten Wellendichtungsanordnung (10a, 10b) abfließt, in einen Ölraum (19a, 19b) eines Verdichtergehäuses (4) des Verdichters (1), in dem mindestens ein ölgeschmiertes Lager (18a, 18b) der Rotorlagerung (16) aufgenommen ist,
- Bereitstellen eines Ölraumdrucks p_{OR} im Ölraum (19a, 19b), der den Umgebungsdruck p₀ des Verdichtergehäuses (4) um eine Ölabscheidedruckdifferenz Δp übersteigt, die vorzugsweise mindestens 20 mbar beträgt,
- Zuführen eines Gasstroms vom Ölraum (19a, 19b) zu einem Ölabscheider (30, 31, 32, 33).

24. Verfahren nach Anspruch 23,
**gekennzeichnet durch** mindestens einen der folgenden Schritte:
- Erfassen des Ölraumdrucks p_{OR} **durch** mindestens einen Drucksensor (25); und/oder
- Erfassen eines Sperrgasraumdrucks p_{SGR}, insbesondere in mindestens einem Sperrgasraum (13a, 13b, 13c, 13d) der Wellendichtungsanordnung (10a, 10b) und/oder in einem Sperrgas-Puffervolumen (48, 55) einer Sperrgaszuführung (50, 51, 51a, 51b), **durch** mindestens einen Drucksensor (45, 45a, 45b); und/oder
- Bestimmen des Differenzdrucks zwischen dem Sperrgasraumdruck p_{SGR}, insbesondere des Sperrgasraumdrucks p_{SGR} in mindestens einem Sperrgasraum (13a, 13b, 13c, 13d) der Wellendichtungsanordnung (10a, 10b) und/oder in einem Sperrgas-Puffervolumen (48, 55) einer Sperrgaszuführung (50, 51, 51a, 51b), und dem Ölraumdruck p_{OR},
wobei die Wellendichtungsanordnung (10a, 10b) insbesondere eine dem ölgeschmierten Lager (18a, 18b) zugewandte, insbesondere berührungslose, äußere Dichtung (17a, 17b) und eine dem Verdichtungsraum (5) zugewandte, insbesondere berührungslose, innere Dichtung (12a, 12b) aufweist und der Sperrgasraum (13a, 13b, 13c, 13d) insbesondere zwischen der äußeren Dichtung (17a, 17b) und der inneren Dichtung (12a, 12b) zur Aufnahme von Sperrgas ausgebildet ist; und/oder
- Überwachen des Sperrgasraumdrucks p_{SGR} und/oder des Ölraumdrucks p_{OR} und/oder des Differenzdrucks zwischen dem Sperrgasruck p_{SGR} und dem Ölraumdruck p_{OR} **durch** eine Steuereinheit (60).

25. Verfahren nach Anspruch 23 oder 24,
**gekennzeichnet durch** Einstellen, insbesondere variables Einstellen, vorzugsweise Regeln, eines Sperrgasraumdrucks p_{SGR} in mindestens einem Sperrgasraum (13a, 13b, 13c, 13d) der Wellendichtungsanordnung (10a, 10b) **durch** Zuführen von Sperrgas in den Sperrgasraum (13a, 13b, 13c, 13d), insbesondere in Abhängigkeit eines Betriebszustands des Verdichters (1), so dass der Sperrgasraumdruck p_{SGR} höher ist als der Ölraumdruck p_{OR} im Ölraum (19a, 19b).

26. Verfahren nach einem der Ansprüche 23 bis 25,
**gekennzeichnet durch** Zuführen von Sperrgas in den Sperrgasraum (13a, 13b, 13c, 13d), insbesondere **durch** Öffnen eines Sperrgas-Zufuhrventils (51, 51a, 51b) einer Sperrgaszuführung (50, 51, 51a, 51b), so dass der Sperrgasraumdruck p_{SGR} im Sperrgasraum (13a, 13b, 13c, 13d) höher ist als der Ölraumdruck p_{OR} im Ölraum (19a, 19b),
- während der Verdichter (1) im Leerlauf betrieben wird und/oder
- während instationärer Betriebszustände des Verdichters (1), vorzugsweise während eines Anfahrzustands oder eines Ausschaltzustands des Verdichters (1), und/oder
- während der Verdichter (1) im Lastlauf betrieben wird, insbesondere wenn der Verdichter (1) ein einstufiger Verdichter ist.

27. Verfahren nach einem der Ansprüche 23 bis 26,
**gekennzeichnet durch** Zuführen eines Leckagegasstroms aus mindestens einem Sperrgasraum (13a, 13b, 13c, 13d) einer, vorzugsweise auf einem höheren zweiten Druckniveau arbeitenden, zweiten Verdichterstufe (3) in mindestens einen Sperrgasraum (13a, 13b, 13c, 13d) einer, vorzugsweise auf einem niedrigeren ersten Druckniveau arbeitenden, ersten Verdichterstufe (2), vorzugsweise über eine die Sperrgasräume (13a, 13b, 13c, 13d) verbindende Sperrgas-Verbindungsleitung (42).

28. Verfahren nach Anspruch 27,
**dadurch gekennzeichnet, dass** die Sperrgasräume mit unterschiedlich hohen Sperrgasraumdrücken pser, nämlich mit p_{SGR1} und p_{SGR2} beaufschlagt werden und die Druckniveaus der Sperrgasräume über Druckregelventile (52, 53) eingestellt werden können.
